# EUROPEAN PATENT APPLICATION

(11) **EP 4 120 089 A1**
(43) Date of publication of application: **18.01.2023**
(21) Application number: 22184665.2
(22) Date of filing: 13.07.2022
(51) Int. Cl.: G06F 12/02, G06F 3/06

(54) **SYSTEMS AND METHODS FOR LOAD BALANCING IN A HETEROGENEOUS MEMORY SYSTEM**

(30) Priority: 15.07.2021 US 202163222406 P; 26.10.2021 US 202117511540
(71) Applicant: Samsung Electronics Co., Ltd., Suwon-si, Gyeonggi-do 16677 (KR)
(72) Inventor: PARK, Heekwon, San Jose, CA 95134 (US); PITCHUMANI, Rekha, San Jose, CA 95134 (US)
(74) Representative: Kuhnen & Wacker Patent- und Rechtsanwaltsbüro PartG mbB

(57) **Abstract**

A system is disclosed. The system may include a processor (110) and a memory (115) connected to the processor (110). A first storage device may be connected to the processor (110). The first storage device may include a first storage portion, which may include a memory page. The first storage portion may extend the memory (115). A second storage device (120-2) may also be connected to the processor (110). The second storage device (120-2) may also include a second storage portion. The second storage portion may also extend the memory (115). A load balancing daemon (145) may migrate the memory page from the first storage portion of the first storage device (120-1) to the second storage portion of the second storage device (120-2) based at least in part on a first update count of the first storage device (120-1) and a second update count of the second storage device (120-2).

## Description

### FIELD

The disclosure relates generally to computer systems, and more particularly to computer systems using storage devices to extend system memory.

### BACKGROUND

Computer systems that include multiple storage devices may have different workloads. One storage device may spend more time writing data than another storage device. For storage devices, such as Solid State Drives (SSDs), where it may take longer to write data than to read data, this workload imbalance may result in the overall performance of the computer system being reduced.

A need remains to process balance the loads in across storage devices.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a system including storage devices that may be used for load balancing in a heterogenous memory system, according to embodiments of the disclosure.
FIG. 2 shows details of the machine of FIG. 1, according to embodiments of the disclosure.
FIG. 3 shows a Solid State Drive (SSD) supporting load balancing, according to embodiments of the disclosure.
FIG. 4 shows a high-level view of the interactions between an application, the memory of FIG. 1, and the storage device of FIG. 1, according to embodiments of the disclosure.
FIG. 5 shows updating of the logical-to-physical address table in the flash translation layer (FTL) of FIG. 3, according to embodiments of the disclosure.
FIG. 6 shows details of the host-managed device memory (HDM) of FIG. 3, according to embodiments of the disclosure.
FIG. 7 shows details of the page table of FIG. 1, according to embodiments of the disclosure.
FIG. 8 shows an example implementation of the page table of FIG. 1, according to embodiments of the disclosure.
FIG. 9 shows the load balancing daemon of FIG. 1 performing load balancing in a heterogenous memory system, according to embodiments of the disclosure.
FIG. 10 shows portions of the storage devices of FIG. 1, according to embodiments of the disclosure.
FIG. 11 shows details of the load balancing daemon of FIG. 1, according to embodiments of the disclosure.
FIG. 12 shows a flowchart of a procedure to perform load balancing in the system of FIG. 1, according to embodiments of the disclosure.
FIG. 13A shows an alternative flowchart of an example procedure to perform load balancing in the system of FIG. 1, according to embodiments of the disclosure.
FIG. 13B continues the alternative flowchart of the example procedure to perform load balancing in the system of FIG. 1, according to embodiments of the disclosure.
FIG. 14 shows a flowchart of an example procedure for the load balancing daemon of FIG. 1 to identify storage devices between which memory pages may be migrated in the system of FIG. 1, according to embodiments of the disclosure.
FIG. 15 shows a flowchart of an example procedure for the load balancing daemon of FIG. 1 to select a memory page to migrate in the system of FIG. 1, according to embodiments of the disclosure.
FIG. 16 shows a flowchart of an alternative procedure for the load balancing daemon of FIG. 1 to identify storage devices or memory pages for migration in the system of FIG. 1, according to embodiments of the disclosure.
FIG. 17 shows a flowchart of a procedure for migration of a memory page in the system of FIG. 1 to occur, according to embodiments of the disclosure.

### SUMMARY

Embodiments of the disclosure include a load balancing daemon. The load balancing daemon may identify a storage device from which to migrate a page, and a page on the storage device to migrate. The load balancing daemon may also identify another storage device to which the page may be migrated. The load balancing daemon may then manage the migration of the page from the first storage device to the second storage device.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

Computer systems may include different forms of storage for data. Typically, computer systems include a host memory (which may be a volatile storage, meaning that the information stored therein may be lost if power is interrupted) and a storage device (which may be a non-volatile storage, meaning that the information stored therein may be preserved even if power is interrupted).

These different forms of storage may have different advantages and disadvantages. For example, aside from the risk of data loss if power is interrupted, host memory may be more expensive to purchase in large amounts, but may have a relatively fast response time (to read and/or write data). Non-volatile storage, on the other hand, may not lose data if power is interrupted, and may be purchased in large amounts inexpensively, but may have a slower response time.

Some computer systems attempt to present all storage (system memory and storage devices) as one extended storage. Applications may read from or write to addresses in this extended view of storage without knowledge of exactly where the data is stored: the computer system may manage these details.

But for storage devices, particularly Solid State Drives (SSDs), which have a slower response time to write data than to read data, a storage device that spends a lot of time writing data may end up slowing down read requests sent to that storage device. If there are other storage devices available, and those other storage devices have lesser loads, the overall performance of the system may be reduced as a result of one storage device handling a large number of write requests.

Embodiments of the disclosure address these issues by identifying the devices that are busiest and idlest, based on updates to where data is stored within the storage device. If the difference in workload between the busiest and idlest devices exceeds a threshold, hot pages may be migrated from the busiest device to the idlest device, to attempt to balance their relative loads and improve overall system performance.

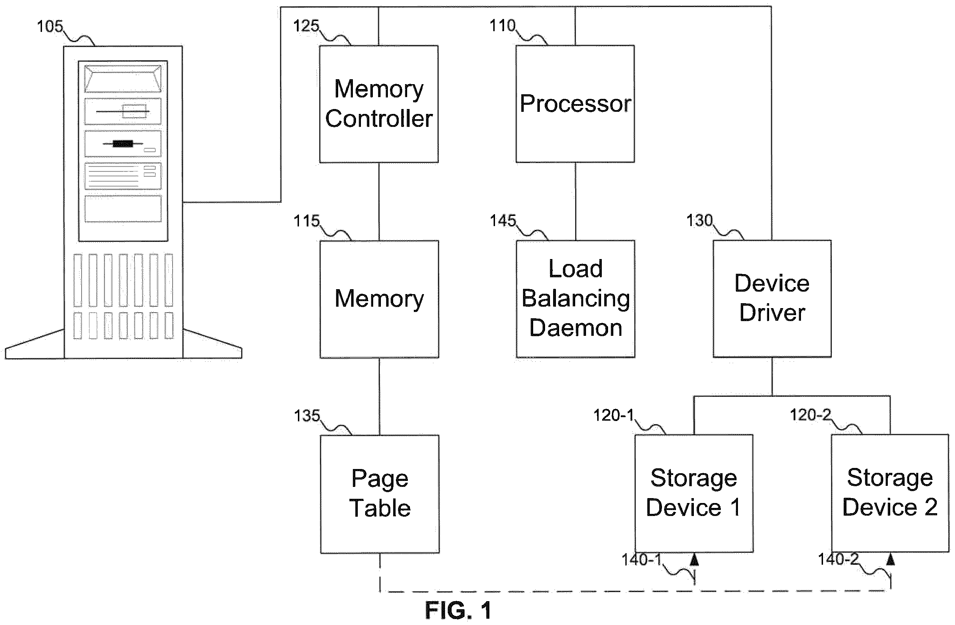

FIG. 1 shows a system including storage devices that may be used for load balancing in a heterogenous memory system, according to embodiments of the disclosure. In FIG. 1, machine 105 (which may also be termed a host, host machine, or host computer) may include processor 110 (which may also be termed a host processor), memory 115 (which may also be termed a host memory), and storage device 120. Processor 110 may be any variety of processor. (Processor 110, along with the other components discussed below, are shown outside the machine for ease of illustration: embodiments of the disclosure may include these components within the machine.) While FIG. 1 shows a single processor 110, machine 105 may include any number of processors, each of which may be single core or multi-core processors, each of which may implement a Reduced Instruction Set Computer (RISC) architecture or a Complex Instruction Set Computer (CISC) architecture (among other possibilities), and may be mixed in any desired combination.

Processor 110 may be coupled to memory 115. Memory 115 may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM), etc. Memory 115 may also be any desired combination of different memory types, and may be managed by memory controller 125. Memory 115 may be used to store data that may be termed "short-term": that is, data not expected to be stored for extended periods of time. Examples of short-term data may include temporary files, data being used locally by applications (which may have been copied from other storage locations), and the like.

Processor 110 and memory 115 may also support an operating system, under which various applications may be running. These applications may issue requests (which may also be termed commands) to read data from or write data to either memory 115 or storage devices 120-1 and/or 120-2 (which may be referred to collectively as storage device 120). Storage device 120 may be accessed using device driver 130. While FIG. 1 uses the generic term "storage device", embodiments of the disclosure may include any storage device formats that may benefit from the use of load balancing, examples of which may include hard disk drives and Solid State Drives (SSDs). Any reference to "SSD" or any other particular form of storage device below should be understood to include such other embodiments of the disclosure. In addition, while FIG. 1 shows two storage devices 120, embodiments of the disclosure may include any number (one or more) of storage devices. Further, while FIG. 1 shows two storage devices 120 both accessed using a single device driver 130, embodiments of the disclosure may include different storage devices 120 being accessed using different device drivers 130.

In some embodiments of the disclosure, storage devices 120 may be used in combination with memory 115 to operate as a heterogeneous memory system. In a heterogeneous memory system, applications may issue load and/or store requests using virtual addresses associated with the applications. The system may then use page table 135 to determine where the data is actually stored: memory 115, storage device 120-1, or storage device 120-2. The system may then load or store the data as requested, with the application being unaware of the actual location where the data is stored. Page table 135 may be stored in memory 115 (as shown), even though storage devices 120-1 and 120-2 may be used to extend memory 115 to implement a heterogeneous memory system using, for example, a cache-coherent interconnect protocol, such as the Compute Express Link^{®} (CXL) protocol, to present a combined memory to applications (Compute Express Link is a registered trademark of the Compute Express Link Consortium, Inc.).

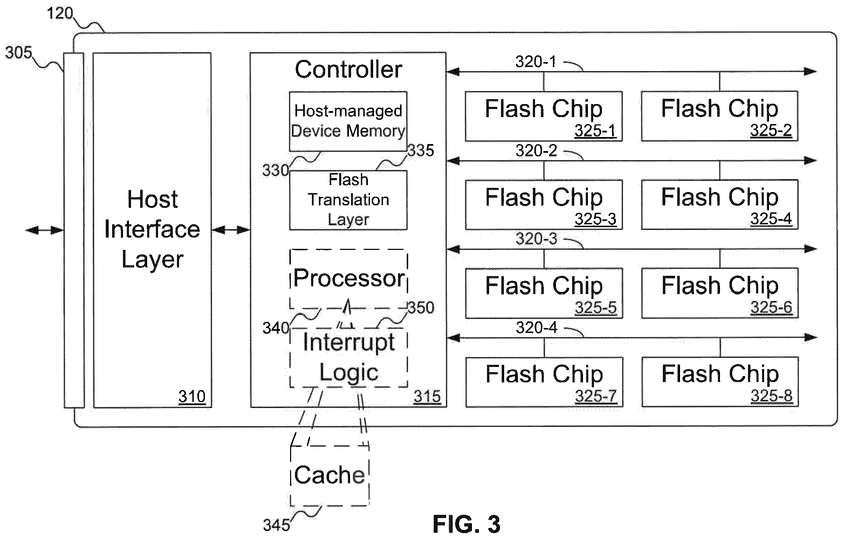

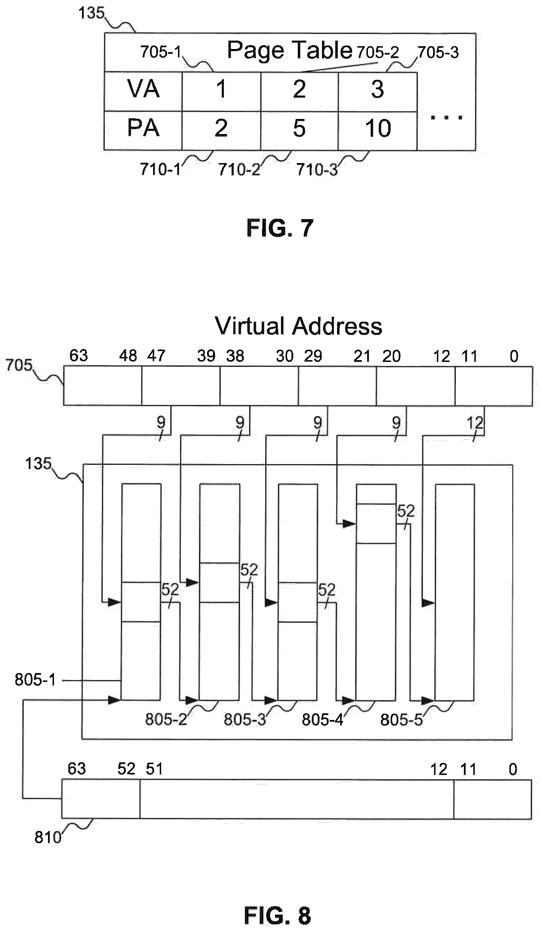

As discussed below with reference to FIGs. 3 and 7, in some embodiments of the disclosure the physical device where the data is stored-memory 115, storage device 120-1, or storage device 120-2-may be implied by the address to which a virtual address maps, and therefore page table 135 may only store the address without also identifying the specific device where the data is stored. In other embodiments of the disclosure, page table 135 may include links, such as links 140-1 and 140-2, that point to various devices used in the heterogeneous memory system. These links 140-1 and 140-2 may be tied to particular entries in page table 135, to indicate which entries identify data stored on the particular devices.

In an ideal situation, data would be read and/or written with equal frequency. But from a practical point of view, not all data is handled equally, even by a single application. Some data may be written once and read multiple times; other data may be written repeatedly. For example, an application may store temporary data, such as interim calculation results. As the interim results are updated, the application may store the updated results. This process may continue until the final results are determined, at which point the final results may be stored.

Because different applications may use data differently-and a single application may use multiple data differently-it may happen that different memory addresses are subject to different levels (and types) of activity. For example, in a heterogeneous memory system such as that shown in FIG. 1, storage device 120-1 may become busy, while storage device 120-2 may be idle. Since write operations-particularly for SSDs-may take more time than read operations, if storage device 120-1 is expected to process both write requests and read requests, those read requests may be delayed, whereas if the data was written to storage device 120-2 instead, the read requests could be handled faster.

Load balancing daemon 145 may manage storage devices 120 to distribute data in a manner that attempts to balance the loads on storage devices 120. (As memory 115 and storage devices 120 may be used to present a heterogeneous memory system, load balancing daemon 145 may also manage loads on memory 115.)

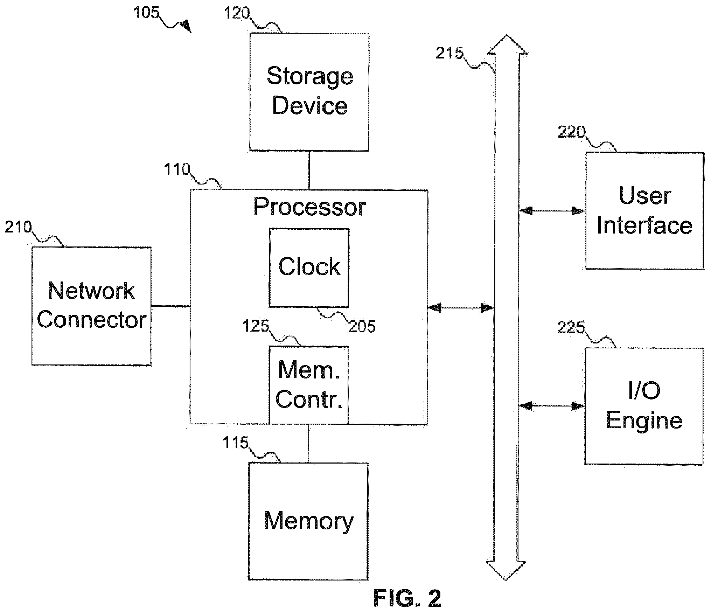

FIG. 2 shows details of machine 105 of FIG. 1, according to embodiments of the disclosure. In FIG. 2, typically, machine 105 includes one or more processors 110, which may include memory controllers 125 and clocks 205, which may be used to coordinate the operations of the components of the machine. Processors 110 may also be coupled to memories 115, which may include random access memory (RAM), read-only memory (ROM), or other state preserving media, as examples. Processors 110 may also be coupled to storage devices 120, and to network connector 210, which may be, for example, an Ethernet connector or a wireless connector. Processors 110 may also be connected to buses 215, to which may be attached user interfaces 220 and Input/Output (I/O) interface ports that may be managed using I/O engines 225, among other components.

FIG. 3 shows a Solid State Drive (SSD) supporting load balancing, according to embodiments of the disclosure. In FIG. 3, SSD 120 may include interface 305. Interface 305 may be an interface used to connect SSD 120 to machine 105 of FIG. 1. SSD 120 may include more than one interface 305: for example, one interface might be used for load and store requests (issued when part or all of SSD 120 is used to extend memory 115 of FIG. 1), another interface might be used for block-based read and write requests, and a third interface might be used for key-value read and write requests. While FIG. 3 suggests that interface 305 is a physical connection between SSD 120 and machine 105 of FIG. 1, interface 305 may also represent protocol differences that may be used across a common physical interface. For example, SSD 120 might be connected to machine 105 using a U.2 or an M.2 connector, but may support load/store requests, block-based requests, and key-value requests: handling the different types of requests may be performed by a different interface 305.

SSD 120 may also include host interface layer 310, which may manage interface 305. If SSD 120 includes more than one interface 305, a single host interface layer 310 may manage all interfaces, SSD 120 may include a host interface layer for each interface, or some combination thereof may be used.

SSD 120 may also include SSD controller 315, various channels 320-1, 320-2, 320-3, and 320-4, along which various flash memory chips 325-1, 325-2, 325-3, 325-4, 325-5, 325-6, 325-7, and 325-8 may be arrayed. SSD controller 315 may manage sending read requests and write requests to flash memory chips 325-1 through 325-8 along channels 320-1 through 320-4. Although FIG. 3 shows four channels and eight flash memory chips, embodiments of the disclosure may include any number (one or more, without bound) of channels including any number (one or more, without bound) of flash memory chips.

Within each flash memory chip, the space may be organized into blocks, which may be further subdivided into pages, and which may be grouped into superblocks. Page sizes may vary as desired: for example, a page may be 4 KB of data. If less than a full page is to be written, the excess space is "unused". Blocks may contain any number of pages: for example, 128 or 256. And superblocks may contain any number of blocks. A flash memory chip might not organize data into superblocks, but only blocks and pages.

While pages may be written and read, SSDs typically do not permit data to be overwritten: that is, existing data may be not be replaced "in place" with new data. Instead, when data is to be updated, the new data is written to a new page on the SSD, and the original page is invalidated (marked ready for erasure). Thus, SSD pages typically have one of three states: free (ready to be written), valid (containing valid data), and invalid (no longer containing valid data, but not usable until erased) (the exact names for these states may vary).

But while pages may be written and read individually, the block is the basic unit of data that may be erased. That is, pages are not erased individually: all the pages in a block are typically erased at the same time. For example, if a block contains 256 pages, then all 256 pages in a block are erased at the same time. This arrangement may lead to some management issues for the SSD: if a block is selected for erasure that still contains some valid data, that valid data may need to be copied to a free page elsewhere on the SSD before the block may be erased. (In some embodiments of the disclosure, the unit of erasure may differ from the block: for example, it may be a superblock, which as discussed above may be a set of multiple blocks.)

Because the units at which data is written and data is erased differ (page vs. block), if the SSD waited until a block contained only invalid data before erasing the block, the SSD might run out of available storage space, even though the amount of valid data might be less than the advertised capacity of the SSD. To avoid such a situation, SSD controller 315 may include a garbage collection controller (not shown in FIG. 3). The function of the garbage collection may be to identify blocks that contain all or mostly all invalid pages and free up those blocks so that valid data may be written into them again. But if the block selected for garbage collection includes valid data, that valid data will be erased by the garbage collection logic (since the unit of erasure is the block, not the page). To avoid such data being lost, the garbage collection logic may program the valid data from such blocks into other blocks. Once the data has been programmed into a new block (and the table mapping logical block addresses (LBAs) to physical block addresses (PBAs) updated to reflect the new location of the data), the block may then be erased, returning the state of the pages in the block to a free state.

SSDs also have a finite number of times each cell may be written before cells may not be trusted to retain the data correctly. This number is usually measured as a count of the number of program/erase cycles the cells undergo. Typically, the number of program/erase cycles that a cell may support mean that the SSD will remain reliably functional for a reasonable period of time: for personal users, the user may be more likely to replace the SSD due to insufficient storage capacity than because the number of program/erase cycles has been exceeded. But in enterprise environments, where data may be written and erased more frequently, the risk of cells exceeding their program/erase cycle count may be more significant.

To help offset this risk, SSD controller 315 may employ a wear leveling controller (not shown in FIG. 3). Wear leveling may involve selecting data blocks to program data based on the blocks' program/erase cycle counts. By selecting blocks with a lower program/erase cycle count to program new data, the SSD may be able to avoid increasing the program/erase cycle count for some blocks beyond their point of reliable operation. By keeping the wear level of each block as close as possible, the SSD may remain reliable for a longer period of time.

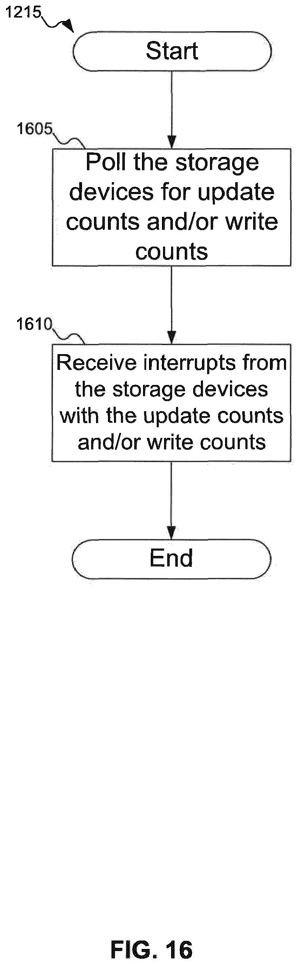

SSD controller 315 may include host-managed device memory (HDM) 330 and flash translation layer (FTL) 335 (which may be termed more generally a translation layer, for storage devices that do not use flash storage). When used in a heterogeneous memory system, SSD 120 may use HDM 330 to present to processor 110 of FIG. 1 a range of memory addresses. In this manner, processor 110 of FIG. 1 may issue load and/or store requests without concern for where the data is actually stored. For example, consider a system, such as machine 105 of FIG. 1, including 8 gigabytes (GB) of memory 115 of FIG. 1 and 16 GB of storage on SSD 120. In such a system, processor 110 of FIG. 1 may be able to load and/or store data in addresses ranging from 0x0 0000 0000 through 0x5 FFFF FFFF, with addresses 0x0 0000 0000 through 0x1 FFFF FFFF being addresses within memory 115 of FIG. 1, and addresses 0x2 0000 0000 through 0x5 FFFF FFFF being addresses within SSD 120. Given a particular memory address, SSD 120 may determine the appropriate block where the data is stored, and may read and/or write the data as requested by processor 110 of FIG. 1 based on the memory address provided.

In some embodiments of the disclosure, all the available storage in SSD 120 may be exposed to processor 110 of FIG. 1 to extend memory 115 of FIG. 1. In other words, if SSD 120 offers a total of 16 GB of storage, then HDM 330 may manage load and/or store requests to any address in the defined memory address range. In other embodiments of the disclosure, part of the storage offered by SSD 120 may be used to extend memory 115 of FIG. 1, with another part of the storage offered by SSD 120 may be accessed directly by applications issuing read and/or write requests to SSD 120 (rather than load and/or store requests, which may first be handled by memory controller 125 of FIG. 1). In such embodiments of the disclosure, the range of addresses that may be exposed using HDM 330 may be smaller than the available storage of SSD 120.

HDM 330 may be thought of as operating "above" FTL 335. That is, HDM 330 may use addresses as determined by processor 110 of FIG. 1 (or an application running on processor 110) and processed using page table 135 of FIG. 1, rather than using the physical addresses where data is actually stored on SSD 120 (as determined by FTL 335).

In some embodiments of the disclosure, HDM 330 may be able to process access to any supported memory address directly. But in other embodiments of the disclosure (for example, in storage devices such as SSD 120 that may use block-addressing rather than byte-addressing), HDM 330 may include a buffer (not shown in FIG. 3). This buffer may be, for example, DRAM storage within SSD 120. When a load or store request is sent to SSD 120, HDM 330 may attempt to access the data from the buffer. If the data is not currently in the buffer, then SSD 120 may commit any unfinished store requests to flash memory chips 325-1 through 325-8, and may then load a new section of data from flash memory chips 325-1 through 325-8 into the buffer.

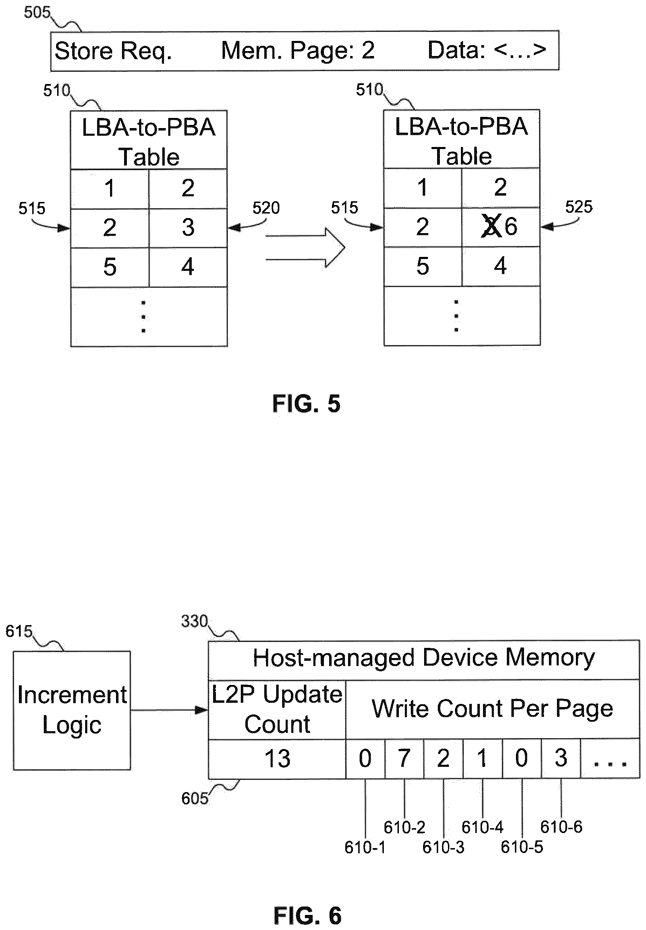

The size of the buffer may be any desired fraction of the storage offered by SSD 120. For example, the buffer may be 1/10 of the storage offered by SSD 120 that is used as heterogeneous memory: if SSD 120 supports a total of 16 GB of storage for heterogeneous memory, then the buffer may be 1.6 GB in size. If DRAM is used for the buffer, such embodiments of the disclosure may provide a balance between supporting byte-addressing and the cost of DRAM used as the buffer. The buffer may also be any variety of volatile memory or non-volatile memory. HDM 330 is discussed further with reference to FIG. 6 below.

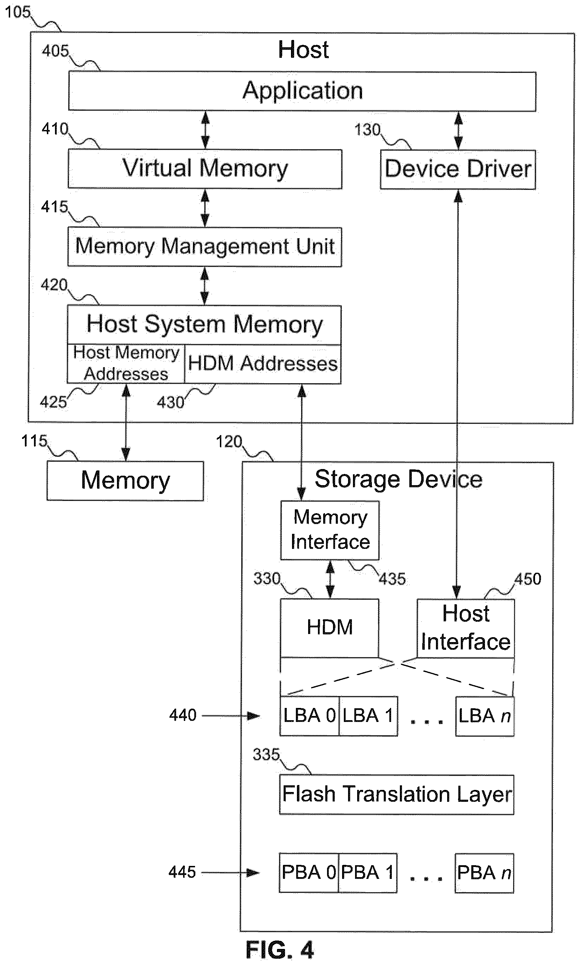

FTL 335 may handle translation of LBAs or other logical IDs (as used by processor 110 of FIG. 1) and PBAs or other physical addresses where data is stored in flash chips 325-1 through 325-8. FTL 335, may also be responsible for relocating data from one PBA to another, as may occur when performing garbage collection and/or wear leveling. FTL 335 is discussed further with reference to FIGs. 4-6 below.

SSD controller 315 may also include processor 340. Processor 340 may be a local processor to SSD 120 that may offer some computational capability from within SSD 120. Processor 340 is optional, as shown by the dashed border.

If processor 340 is included, processor 340 may include cache 345. Cache 345 may operate similarly to a conventional cache, providing a storage closer to (and potentially faster than) processor 340. But if cache 345 is used to store information also stored in flash memory chips 325-1 through 325-8, this creates a potential problem. If data in cache 345 is updated but not immediately flushed, it could be that data in flash memory chips 325-1 through 325-8 (that is currently cached), accessed through HDM 330, could be stale relative to the values stored in cache 345. Since load balancing daemon 145 of FIG. 1 might access flash memory chips 325-1 through 325-8 but not cache 345, load balancing daemon 145 of FIG. 1 might be using stale data in its calculations. The solutions to this problem may be either to make data accessed through HDM 330 be uncacheable (that is, data accessed through HDM 330 may not be stored in cache 345), or to ensure that any updates to data in cache 345 are automatically flushed to flash memory chips 325-1 through 325-8.

Finally, SSD controller 315 may also include interrupt logic 350. In some embodiments of the disclosure, load balancing daemon 145 of FIG. 1 might not access HDM 330, and may therefore query (or poll) SSD 120 for its current information rather than attempting to access that information through HDM 330. Interrupt logic 350 may then provide the requested information to load balancing daemon 145 of FIG. 1 by, for example, interrupting load balancing daemon 145 of FIG. 1. Interrupt logic 350 may be implemented as a hardware circuit or as software (for example, running on processor 340). Interrupt logic 350 is optional, as shown by the dashed border. Note that interrupt logic 350 may use the same interrupt or different interrupts to inform load balancing daemon 145 of FIG. 3 about various information, as discussed below with reference to FIG. 6.

FIG. 4 shows a high-level view of the interactions between an application, memory 115 of FIG. 1, and storage device 120 of FIG. 1, according to embodiments of the disclosure In FIG. 4, application 405 may issue load or store requests to memory 115, and/or read or write requests to storage device 120. Load or store requests may use virtual memory addresses in virtual memory 410. Memory management unit 415 (which may include a translation buffer not shown in FIG. 4) may use page table 135 of FIG. 1 (not shown in FIG. 4) to determine the physical address in host system memory 420 that is associated with the virtual address used by application 405.

As may be seen, host system memory 420 may be divided into multiple sections. In FIG. 4, host system memory 420 may include host memory addresses 425, which may be addresses within memory 115, and HDM addresses 430, which may be addresses within HDM 330. (In embodiments of the disclosure that include more than one storage device 120 used to extend memory 115, there may be a range of HDM addresses associated with each storage device. FIG. 4 shows only one storage device 120 and only one HDM address range 430 for purposes of understanding.)

For physical addresses in host memory addresses 425, memory management unit 415 may issue load or store requests over the memory bus to memory 115. For physical addresses in HDM addresses 430, memory management unit 415 may issue load or store requests using a cache-coherent interconnect protocol, such as the CXL.mem protocol, for example. Storage device 120 may receive such load store requests at memory interface 435. HDM 330 may then be used to access the data from flash memory chips 325-1 through 325-8 of FIG. 3. Note that HDM 330 may access some or all of LBAs 440 (as the physical address determined by memory management unit 415). These LBAs 440 may then be mapped to PBAs 445 by flash translation layer 335.

In FIG. 4, application 405 is also shown as issuing read or write requests to storage device 120 via device driver 130. These read or write requests may be sent from device driver 130 to storage device 120 by an appropriate bus connecting to storage device 120: for example, a Peripheral Component Interconnect Express (PCIe) bus. These read or write requests may be received by host interface 450, which may be, for example, a Non-Volatile Memory Express (NVMe) interface. Storage device 120 may then determine the LBA(s) in LBAs 440 that are being accessed in the read or write requests. These LBAs may then be mapped to PBAs 445 by flash translation layer 335. Note that if storage device 120 supports access via both memory interface 435 and host interface 450, then storage device 120 may enable multiple modes to access the same data. In some embodiments of the disclosure, this may be blocked: that is, a particular LBA may be accessed using load or store requests via memory interface 435 or using read or write requests via host interface 450, but not both.

FIG. 5 shows updating of the logical-to-physical address table in FTL 335 of FIG. 3, according to embodiments of the disclosure. In FIG. 5, SSD 120 of FIG. 3 may receive store request 505. Store request 505 may include the address of the memory page (recall that as far as processor 110 of FIG. 1 is concerned, the store request is accessing memory 115 of FIG. 1 and storage devices 120 of FIG. 1 are being used to extend memory 115 of FIG. 1) to be written, along with the data itself. To avoid confusion regarding whether a "page" refers to a page of memory or a page in a block in flash memory 325 of FIG. 3, references to "page" (without a modifier) generally may be understood to refer to a page in a block in flash memory 325 of FIG. 3, and references to "memory page" generally may be understood to refer to a page in memory (whether within in memory 115 of FIG. 1 or the extended memory).

As discussed above, SSDs such as SSD 120 of FIG. 3 do not normally permit data to be overwritten in place. Instead, the old data may be invalidated and the new data written to a new physical block address (PBA) in SSD 120 of FIG. 3. Since an LBA is (as far as SSD 120 of FIG. 3 is concerned) just a logical address that identifies the data, the address of the memory page in store request 505 may be used as the LBA. FTL 335 of FIG. 3 may include LBA-to-PBA table 510, which may identify the physical block on SSD 120 of FIG. 3 where the data is actually stored. In this manner, the application may write data as often as desired to the specified LBA: SSD 120 of FIG. 3 may simply update where the data is stored in LBA-to-PBA table 510, and the application may not have to deal with the actual physical address of the data.

On the left side of FIG. 5, LBA-to-PBA table 510 may be seen. LBA-to-PBA table 510 may include various pairs, specifying the LBA used by the application and the PBA where the data is actually stored. For example, LBA 515 may be mapped to PBA 520, indicating that the data identified by the application using the LBA 2 may be stored in PBA 3.

Upon receiving store request 505, FTL 335 of FIG. 3 may update LBA-to-PBA table 510, as shown on the right side of FIG. 5. PBA 520 may be replaced with PBA 525, identifying the new PBA where the data is stored.

While FIG. 5 shows LBA-to-PBA table 510 as including three entries (mapping three LBAs to three PBAs), embodiments of the disclosure may include any number (zero or more) of entries in LBA-to-PBA table 510.

FIG. 6 shows details of a portion of HDM 330 of FIG. 3, according to embodiments of the disclosure. In FIG. 6, aside from supporting access to data in flash memory chips 325-1 through 325-8 of FIG. 3, HDM 330 may also store information, such as logical-to-physical update count 605 (which may be referred to as update count 605) and write counts per page 610-1 through 610-6 (which may be referred to collectively as write counts 610). Update count 605 may count the number of times any data has been updated in SSD 120 of FIG. 3 (or at least since the last time update count 605 was reset); write counts 610 may count the number of times each associated page has been updated (or at least since the last time write counts 610 were reset). Note that update count 605 and write-counts 610 may track information associated with the memory page addresses as sent by machine 105 of FIG. 1, rather than the PBAs used by SSD 120 of FIG. 3 (the PBAs may change as data is moved around SSD 120 of FIG. 3, but the memory page addresses as used by machine 105 may remain the same). Thus, the reference to "page" in "write count per page" may be understood to refer to a memory page rather than a physical page in a block on SSD 120 of FIG. 3. But in some embodiments of the disclosure, write counts 610 may be associated with the PBA where the data is actually stored, rather than the address of the memory page being accessed.

Whenever a new store request, such as store request 505 of FIG. 5, is received, increment logic 615 may increment update count 605, as well as write count 610 associated with the memory page being updated. Each write count 610 may be associated with a particular memory page (this association is not shown in FIG. 6): for example, each write count may be associated with a memory page that is used as an LBA in the same order shown in LBA-to-PBA table 510 of FIG. 5. So, for example, when store request 505 of FIG. 5 is received by SSD 120 of FIG. 3, increment logic 615, which may be part of FTL 335 of FIG. 3, may increment update count 605 and write count 610-2 (being the write count associated with memory page 2). Note that LBA-to-PBA table 510 of FIG. 5 may be stored in HDM 330, and/or combined with write counts 610 rather than SSD 120 of FIG. 3 including two separate tables.

As discussed above, due to SSDs erasing blocks rather than pages, it may sometimes occur that valid data exists in a block selected for garbage collection, and such data may be programmed into a new block on the SSD. In addition, as discussed above, to keep cells of flash memory relatively balanced in terms of how many program/erase cycles each cell has undergone, it may sometimes occur that data is moved to another block due to wear leveling. In some embodiments of the disclosure, FTL 335 of FIG. 3 may count the number of times data is written in store requests such as store request 505 of FIG. 5, but may exclude program operations due to garbage collection and/or wear leveling. In other embodiments of the disclosure, FTL 335 of FIG. 3 may also include in update count 605 and write counts 610 the number of times data has been programmed due to garbage collection and/or wear levelling. As discussed above, update count 605 and write counts 610 may be associated with memory pages rather than PBAs, whereas garbage collection and/or wear levelling may be associated with the PBA. But since the memory page address may be used as the LBA by SSD 120 of FIG. 3, and because FTL 335 of FIG. 3 may be used to determine both the PBA based on an LBA and the LBA based on a PBA, in some embodiments of the disclosure it may be possible for update count 605 and write counts 610 to track data programming based on garbage collection and/or wear levelling.

If storage device 120 of FIG. 1 is used both to extend memory 115 of FIG. 1 and to permit direct access by application 405 of FIG. 4, storage device 120 of FIG. 1 may receive both store requests, such as store request 505, and write requests. The difference between the two types of requests may be that store requests may use storage device 120 of FIG. 1 as an extension of memory 115 of FIG. 1 (referencing data using memory page addresses), whereas write requests may use storage device 120 as a storage device (referencing data using LBAs). In embodiments of the disclosure where a particular LBA may be accessed using both store requests and write requests, it may be up to the implementation whether write requests are considered updates to the data at the LBA that may trigger increments to update count 605 and write counts 610. In some embodiments of the disclosure, update count 605 and write counts 610 may be updated only in response to store requests (updates via write requests may be treated as not updating data in "memory", even if the LBA is the same as an LBA of data in "memory"). In other embodiments of the disclosure, update count 605 and write counts 610 may be updated in response to both store requests and write requests (treating updates to the data at that LBA as updating data in memory, regardless of the path the request took).

Because SSD 120 of FIG. 3 may include flash memory and FTL 335 of FIG. 3 to track where data is physically stored on SSD 120 of FIG. 3, and because flash memory may be programmed and erased at different levels of granularity, SSD 120 of FIG. 3 may do most of what is needed to track update count 605 and write counts 610: all that is needed is to add storage for these counters. Other storage devices, such as hard disk drives, may not necessarily track such information, for example because data may be updated in place. But in some embodiments of the disclosure, such other storage device types may track update count 605 and write counts 610 as well.

While FIG. 6 shows HDM 330 as including six write counts 610-1 through 610-6, embodiments of the disclosure may include any number (zero or more) of write counts 610 in HDM 330, with one write count 610 for each memory page address written to storage device 120 of FIG. 1.

When update count 605 and write counts 610 are stored in HDM 330, load balancing daemon 145 of FIG. 1 may access update count 605 and write counts 610 using standard load requests. Note that a portion of HDM 330 (that is, a portion of the storage of storage device 120 of FIG. 1) may be reserved to store update count 605 and write counts 610. But as discussed above with reference to FIG. 3, in some embodiments of the disclosure, storage device 120 of FIG. 1 may use interrupt logic 350 of FIG. 3 to provide various information to load balancing daemon 145 of FIG. 1. For example, load balancing daemon 145 of FIG. 1 may inquire about update count 605 of write counts 610. In embodiments of the disclosure where interrupts are used, storage device 120 of FIG. 1 may use interrupt logic 350 of FIG. 3 to provide such information to load balancing daemon 145 of FIG. 1. Such information may be provided at one time or at separate times. For example, storage device 120 of FIG. 1 may provide both update count 605 and write counts 610 at one time, or may provide such information at different times (since load balancing daemon 145 of FIG. 1 may be interested in write counts 610 only for the busy storage device from which data may be migrated). If multiple interrupts are used to provide such information, interrupt logic 350 may use the same interrupt signal or different interrupt signals to provide the various information.

FIG. 7 shows details of page table 135 of FIG. 1, according to embodiments of the disclosure. As discussed above, a heterogeneous memory system may store data in memory 115 of FIG. 1 or storage devices 120 of FIG. 1, without the application being aware of where the data is actually stored. The application may use a logical address (termed a "virtual address"), which page table 135 may then map to the "physical address" where the data is stored. The term "physical address" may be understood to refer to memory address used in the heterogeneous memory system when data is stored. If the data is stored in memory 115 of FIG. 1, then the "physical address" may be the actual (physical) address in memory 115. But where the data is actually stored on SSD 120 of FIG. 3, the memory page address may be interpreted by SSD 120 of FIG. 3 as an LBA. Thus, "physical address" should also be understood to refer to a logical address when data is stored on SSD 120 of FIG. 3 or other storage devices that may internally map a logical address to the physical location in the storage device where the data is stored. Thus, in the context of page table 135, depending on the device storing the data, the term "physical address" may refer to a physical address or a logical address.

Because processor 110 of FIG. 1 may access data from any location in a heterogeneous memory system, and because processor 110 of FIG. 1 may see the entirety of the heterogenous memory system as though it were all memory 115 of FIG. 1, the physical address stored in the page table may uniquely identify the device where the data is stored. For example, continuing the situation described above with reference to FIG. 3, page table 135 may map a virtual address as used by application 405 of FIG. 2 to any physical address in the address range 0x0 0000 0000 through 0x5 FFFF FFFF. With addresses 0x0 0000 0000 through 0x1 FFFF FFFF identifying data stored in memory 115 of FIG. 1 and addresses 0x2 0000 0000 through 0x5 FFFF FFFF identifying data stored on SSD 120 of FIG. 3, any particular address may be associated with a particular device (be it memory 115 of FIG. 1 or storage devices 120 of FIG. 1), and therefore the particular device where the data is stored may be identified. In this manner, a particular load or store request may be directed to the appropriate device (for example, by memory controller 125 of FIG. 1). But in some embodiments of the disclosure, page table 135 may also store information identifying the particular device where the data is stored (which may expedite data access, since the physical address may not need to be examined to determine where the data is stored).

In FIG. 7, page table 135 is shown mapping three virtual addresses to three physical addresses. Virtual address 705-1 may map to physical address 710-1, virtual address 705-2 may map to physical address 710-2, and virtual address 705-3 may map to physical address 710-3. Virtual addresses 705-1 through 705-3 may be referred to collectively as virtual addresses 705, and physical addresses 710-1 through 710-3 may be referred to collectively as physical addresses 710. While FIG. 7 shows page table 135 as including three mappings of virtual addresses to physical addresses, embodiments of the disclosure may include any number (zero or more) of such mappings in page table 135.

In some embodiments of the disclosure, the virtual addresses used by different applications may overlap. For example, two different applications might both use a virtual address 0x1000. To avoid confusion and avoid the risk of multiple applications accessing common heterogeneous memory system addresses, each application may have its own page table 135, mapping the virtual addresses used by the application to the physical addresses used by machine 105 of FIG. 1. In this manner, two applications may each use the virtual address 0x1000, but virtual address 0x1000 of one application may map to, say, physical address 0x0 0000 0000, and virtual address 0x1000 of the other application may map to, say, physical address 0x3 0000 0000.

Of course, in some embodiments of the disclosure, applications may share access to a particular physical address to enable sharing of data and/or inter-application communication. In such a situation, page table 135 for each application may map virtual addresses to the common physical address: this mapping may be from the same virtual address or different virtual addresses. But such a situation reflects an intentional sharing of data, rather than an accidental sharing of data.

FIG. 8 shows an example implementation of page table 135 of FIG. 1, according to embodiments of the disclosure. In FIG. 8, four level page table 135 is shown. For virtual address 705, some bits may be used to determine offsets into various tables: by using all the various tables and offsets, a particular physical address may be determined. For example, bits 39 through 47 may be used as an offset into table 805-1, bits 30 through 38 may be used as an offset into table 805-2, bits 21 through 29 may be used as an offset into table 805-3, bits 12 through 20 may be used as an offset into table 805-4, and bits 0 through 11 may be used as an offset into table 805-5. The base address of table 805-1 may be accessed using register 810 in processor 110 of FIG. 1 (which may be termed the CR3 register), or by using some bits within register 810 in processor 110 of FIG. 1. Each entry in tables 805-1 through 805-4 may identify the base address for the next table, and the entry in table 805-5 may be the actual physical address to be returned by page table 135. In this manner, page table 135 may permit access to virtual addresses across large swaths of memory 115 of FIG. 1 (as extended using storage devices 120 of FIG. 1) without having to store mappings from every possible virtual address (which may require significant amounts of memory 115 of FIG. 1).

While FIG. 8 shows an implementation using a four-level page table with 52-bit entries accessed using nine-bit offsets, embodiments of the disclosure may support any desired page table implementation, may include any number (including one) of levels (also called hierarchies), entries including any number (one or more) of bits, and using any number (one or more) of bits to determine offsets into the tables.

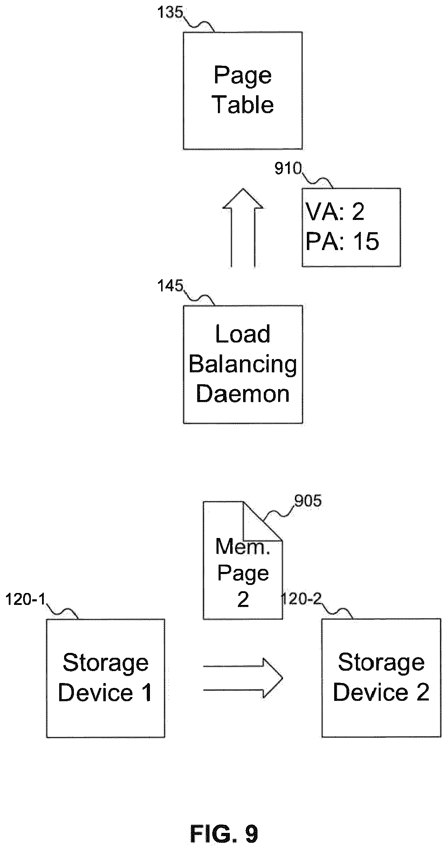

FIG. 9 shows load balancing daemon 145 of FIG. 1 performing load balancing in a heterogenous memory system, according to embodiments of the disclosure. In FIG. 9, load balancing daemon 145 may consider the loads on storage devices 120. For example, assume that update count 605 of FIG. 6 for storage device 120-1 is 13, and that update count 605 of FIG. 6 for storage device 120-2 is two. Load balancing daemon 145 may determine update counts 605 of FIG. 6 for storage devices 120 by accessing HDM 330 of FIG. 3 from storage devices 120, or by polling storage devices 120 for this information. These values would mean that, since the last time update counts 605 of FIG. 6 for storage devices 120 were reset, applications have written updates to data on storage device 120-1 13 times, but applications have written updates to data on storage device 120-2 only twice. Load balancing daemon 145 may access update counts 605 of FIG. 6 and may determine the relative loads on storage devices 120 from update counts 605 of FIG. 6.

Load balancing daemon 145 may then select two storage devices, one of which may be identified as a "busy" storage device and another that may be identified as an "idle" storage device. In some embodiments of the disclosure, particularly where system 105 of FIG. 1 includes more than two storage devices 120, load balancing daemon may select one storage device 120 that is the "busiest" storage device (that is, the storage device with the highest update count 605 of FIG. 6) and another storage device 120 that is the "idlest" storage device (that is, the storage device with the lowest update count 605 of FIG. 6); in other embodiments of the disclosure, load balancing daemon 145 may select two storage devices without necessarily selecting the "busiest" or "idlest" storage devices, nor do the two storage devices have to be relatively "busy" or "idle".

While storage devices 120 may be relatively "busy" or "idle", that fact alone does not mean that load balancing daemon 145 automatically needs to migrate data between the storage devices. For example, assume that storage device 120-1 had an associated update count 605 of FIG. 6 of two, and storage device 120-2 had an associated update count 605 of FIG. 6 of one. Moving a page from storage device 120-1 to storage device 120-2 would alter which storage device was "busy", but likely would not improve the overall performance of system 105 of FIG. 1. Thus, load balancing daemon 145 may use update counts 605 of FIG. 6 to determine whether the relative loads justify migrating data between storage devices 120. Load balancing daemon 145 may use any desired approach to determine if the relative loads justify migration. For example, after selecting a "busy" storage device and an "idle" storage device, load balancing daemon 145 may determine the difference between update counts 605 of FIG. 6 for the storage device and compare that difference with a threshold. If the difference between update counts 605 of FIG. 6 exceeds some threshold, load balancing daemon 145 may begin the process to migrate some data between storage devices 120; otherwise, load balancing daemon 145 may leave storage devices 120 as they are. This threshold may be an absolute threshold-for example, if the difference between update counts 605 of FIG. 6 for the selected devices is greater than 10-or a relative threshold-for example, update count 605 of FIG. 6 for storage device 120-1 is 10% greater than update count 605 of FIG. 6 for storage device 120-2.

Once load balancing daemon 145 has determined that storage device 120-1 has a sufficiently greater load than storage device 120-2 to justify migrating data, load balancing daemon 145 may then determine which memory page(s) on storage device 120-1 to migrate to storage device 120-2. Load balancing daemon 145 may select memory page(s) using any desired algorithm. For example, load balancing daemon 145 may attempt to identify a set of memory pages on storage device 120-1 whose write counts 610 of FIG. 6, if moved from storage device 120-1 to storage device 120-2, would result in update counts 605 of storage devices 120-1 and 120-2 being roughly or close to equal. Load balancing daemon 145 may determine write counts 610 of FIG. 6 for storage devices 120 by accessing HDM 330 of FIG. 3 from storage devices 120, or by polling storage devices 120 for this information. Load balancing daemon 145 may select, for example, a set of memory pages whose write counts 610 of FIG. 6 are approximately ½ of the difference between update counts 605 of FIG. 6 for storage devices 120-1 and 120-2 for migration. (The total of write counts 610 of FIG. 6 for the memory pages to be migrated may be ½ of the difference between update counts 605 of FIG. 6 because migration involves both subtracting those write counts 610 of FIG. 6 from update count 605 of FIG. 6 associated with storage device 120-1 and adding those write counts 610 of FIG. 6 to update count 605 of FIG. 6 associated with storage device 120-2.)

While embodiments of the disclosure may include selecting any set of memory pages to migrate between storage devices 120, migrating a memory page make take some time, which may impact other requests to storage device 120-2, particularly other write requests. Thus, in some embodiments of the disclosure a minimal set of memory pages may be migrated between storage devices 120. To keep the number of memory pages selected for migration as small as possible, the memory pages with the largest write counts 610 of FIG. 6 may be selected. For example, memory page 515 of FIG. 5 may be associated with write count 610-2 of FIG. 6, which may the largest write count for a memory page stored on storage device 120-1: migrating just one memory page may take less time than migrating the memory pages with write counts 610-3, 610-4, and 610-6 of FIG. 6, which collectively have a lower write count than write count 610-2 of FIG. 6. Thus, as shown in FIG. 9, load balancing daemon 145 may instruct that memory page 905 be migrated from storage device 120-1 to storage device 120-2, which may strike a balance between balancing the loads on storage devices 120 and minimizing the number of memory pages to migrate between storage devices 120.

But if data is migrated from storage device 120-1 to storage device 120-2, and if page table 135 maps the virtual address used by the application to the "physical address" of the data, the information in page table 135 may be out-of-date after memory page 905 is migrated from storage device 120-1 to storage device 120-2. For example, consider the situation where memory addresses 0x0 0000 0000 through 0x1 FFFF FFFF identify data stored in memory 115 of FIG. 1, addresses 0x2 0000 0000 through 0x3 FFFF FFFF identify data stored on storage device 120-1, and addresses 0x4 0000 0000 through 0x5 FFFF FFFF identify data stored on storage device 120-2. If memory page 905 is migrated from storage device 120-1 to storage device 120-2 without updating the physical address in page table 135, then the relationship between memory address and device may be broken. There are at least two solutions to resolve this: either the memory page address may be updated to reflect the new location in the heterogeneous memory system where the data is stored, or page table 135 may map virtual addresses 705 of FIG. 7 to physical addresses 710 of FIG. 7 and to identifiers of the device (memory 115 of FIG. 1, storage device 120-1, or storage device 120-2) where the data is actually stored.

Since the data is being migrated from one memory page to another within the heterogeneous memory system, it is reasonable to update the physical address to which the virtual address is mapped in page table 135. Thus, to support the application being able to access its data, load balancing daemon 145 may update page table entry 910 in page table 135 to reflect the new location where the data is stored. For example, whereas physical address 710-2 of FIG. 7 indicated that the data associated with virtual address 705-2 of FIG. 7 was formerly associated with the memory page address five, after migration page table 910 may be updated to reflect that the memory page address is now 15. But in embodiments of the disclosure where any device (memory 115 of FIG. 1, storage device 120-1, or storage device 120-2) in the heterogenous memory system may store data with any memory page address, page table 135 may reflect not only the memory page address but also identify the device where the data is stored (shown symbolically as links 140 in FIG. 1).

In the above discussion, load balancing daemon 145 is described as migrating data between storage devices 120. As load balancing daemon 145 may focus on balancing the loads of storage devices 120, this is reasonable. But embodiments of the disclosure may also consider the load on memory 115 of FIG. 1, and load balancing daemon 145 may also arrange data migration between memory 115 of FIG. 1 and storage devices 120 (in either direction: either moving data to memory 115 of FIG. 1 or moving data from memory 115 of FIG. 1). Load balancing daemon 145 may use other thresholds to determine if data is hot enough (that is, accessed frequently enough) to justify moving data from storage devices 120 to memory 115 of FIG. 1, or to determine if data is cold enough (that is accessed infrequently enough) to justify moving data from memory 115 of FIG. 1 to storage devices 120. Load balancing daemon 145 may also use different thresholds based on the devices under consideration. For example, the threshold used to determine whether to migrate data from an SSD to a hard disk drive (or to memory) might differ from the threshold used to migrate data from a hard disk drive (or from memory) to an SSD. Or, the threshold may be based in part on the characteristics of the device. For example, higher thresholds may be associated with devices that may process requests faster than other devices, and lower thresholds may be associated with devices that may process requests slower than other devices.

The above discussion also describes load balancing daemon 145 as focusing on write requests issued to storage devices 120. For storage devices such as SSDs, where write requests may take longer than read requests, balancing write request loads may be reasonable. But in some embodiments of the disclosure, load balancing daemon 145 may also factor in the loads imposed by read requests (or may focus solely on the loads imposed by read requests). For example, in systems where data is relatively static, read requests may predominate. Load balancing daemon 145 may attempt to distribute data across storage devices 120 in a manner that results in roughly equal numbers of read operations, which may improve overall performance.

Finally, the above discussion assumes that storage devices 120 have roughly equivalent performance. That is, the amount of time needed for storage device 120-1 to write data may be expected to be roughly the same as the amount of time needed for storage device 120-2 to write data, and similarly for reading data. If the performance storage devices 120 may vary, load balancing daemon 145 may factor in the time required for storage devices 120 to carry out their operations. For example, assume that storage device 120-1 takes an average of 100 microseconds (µs) to respond to a write request, and that storage device 120-2 takes an average of 200 µs to respond to a write request. If storage device 120-1 has processed 13 write requests (based on update count 605 of FIG. 6), then storage device 120-1 has spent approximately 1300 µs (1.3 milliseconds (ms)) processing write requests. If storage device 120-2 has only had to handle two write requests in the same interval, then storage device 120-2 has spent approximately 400 µs processing write requests, and it may be advantageous to migrate some data from storage device 120-1 to storage device 120-2, even though storage device 120-2 may have a slower write request response time. But if storage device 120-2 has had to handle seven write requests in that interval, then storage device 120-2 has spent approximately 1400 µs (1.4 ms) processing write requests: a larger amount of time than storage device 120-1 has spent processing write requests, even though storage device 120-1 has processed more write requests than storage device 120-2. In this situation, migrating data from storage device 120-1 to storage device 120-2 might actually degrade performance, rather than enhance it. Thus, to operate in a system using storage devices of varying performance levels, estimating the amount of time storage devices 120 have spent processing write requests may provide a better analysis than update counts 605 of FIG. 6. In a similar way, read performance may vary, which may also be considered by load balancing daemon 145.

Load balancing daemon 145 may periodically reset update counts 605 of FIG. 6 and/or write counts 610 of FIG. 6 in HDM 330 of FIG. 3 for storage devices 120. For example, after load balancing daemon 145 has migrated data in system 105 of FIG. 1, load balancing daemon 145 may reset update counts 605 of FIG. 6 and/or write counts 610 of FIG. 6 in HDM 330 of FIG. 3 for storage devices 120, so that the next time load balancing daemon 145 determines whether to migrate data between storage devices 120, the determination is made based on an analysis of update counts 605 of FIG. 6 and write counts 610 of FIG. 6 after the previous data migration. If load balancing daemon 145 may access HDM 330 of FIG. 3, load balancing daemon 145 may reset update counts 605 of FIG. 6 and/or write counts 610 of FIG. 6; otherwise, load balancing daemon 145 may request storage devices 120 to reset update counts 605 of FIG. 6 and/or write counts 610 of FIG. 6 in HDM 330 of FIG. 3.

Note also that sometimes an application may no longer use a particular data, and may release it from memory. Since that data is not going to be used in the future, the write count associated with that address may be reset immediately. In addition, because the load represented by update count 605 of FIG. 6 may factor in writes to data that has been released from memory, update count 605 of FIG. 6 may be reduced by the value of write count 610 of FIG. 6 for the associated memory page that has been released from memory. In this manner, the heterogenous memory system may avoid views of the loads on storage devices 120 that might not reflect future loads.

While FIG. 9 shows load balancing daemon 145 migrating one memory page 905 from storage device 120-1 to storage device 120-2, embodiments of the disclosure may support migrating any number (one or more) of pages from storage device 120-1 to storage device 120-2. In addition, if the loads of storage devices 120-1 and 120-2 are sufficiently close (within a threshold), load balancing daemon 145 may determine that no data migration is currently necessary.

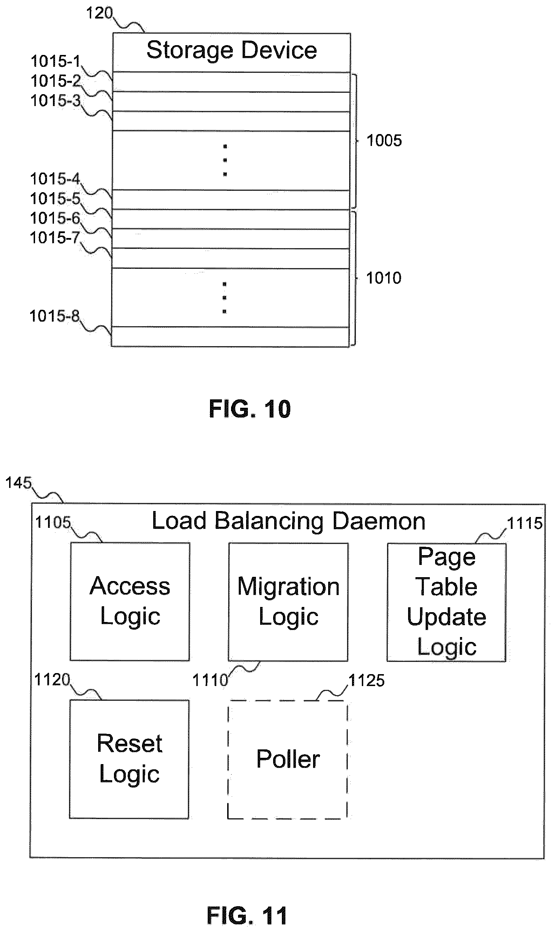

FIG. 10 shows portions of storage devices 120 of FIG. 1, according to embodiments of the disclosure. In FIG. 10, storage device 120 may include pages 1015-1 through 1015-8. As discussed above, pages 1015-1 through 1015-8 may be organized into blocks, which in turn may be organized into superblocks.

But in addition to this organization, different portions of storage device 120 may be assigned to different uses. For example, pages 1015-1 through 1015-8 may be organized into two portions 1005 and 1010. Portion 1005 may be used with the heterogeneous memory system as described above. Portion 1010 may be accessed by applications as per normal storage access. That is, applications may issue read or write requests to access data stored in portion 1010, rather than load or store requests that might appear to be directed to memory 115 of FIG. 1. While FIG. 10 shows portions 1005 and 1010 as having no overlap, in some embodiments of the disclosure, portions 1005 and 1010 may overlap, enabling an application to access data in those overlapped pages using both load/store requests and read/write requests. That is, an application may write data in those overlapped pages using host interface 450 of FIG. 4 and may read that data using memory interface 435 and HDM 330 of FIG. 4, or vice versa.

While the above description focuses on pages 1015-1 through 1015-8 in units of pages, embodiments of the disclosure may organize other units, such as blocks or superblocks, into portions 1005 and 1010. In addition, storage device 120 may include any number (one or more) portions, of which none, some, or all may overlap to varying degrees.

FIG. 11 shows details of load balancing daemon 145 of FIG. 1, according to embodiments of the disclosure. Load balancing daemon 145 may include access logic 1105, migration logic 1110, page table update logic 1115, and reset logic 1120. Access logic 1105 may be used to read data from HDM 330 of FIG. 3 of storage devices 120 of FIG. 1. Migration logic 1110 may instruct storage devices 120 of FIG. 1 to migrate memory page 905 of FIG. 9 as directed by load balancing daemon 145. Page table update logic 1115 may update page table 135 of FIG. 1 when data, such as memory page 905 of FIG. 9, is migrated from storage device 120-1 of FIG. 1 to storage device 120-2 of FIG. 1. Reset logic 1120 may be used to reset data in HDM 330 of FIG. 3 of storage devices 120 of FIG. 1.

As discussed above with reference to FIG. 9, in some embodiments of the disclosure load balancing daemon 145 may poll storage devices 120 of FIG. 1 for information in HDM 330 of FIG. 3, rather than directly accessing such data. In such embodiments of the disclosure, load balancing daemon 145 may include poller 1125, which may poll storage devices 120 for the information.

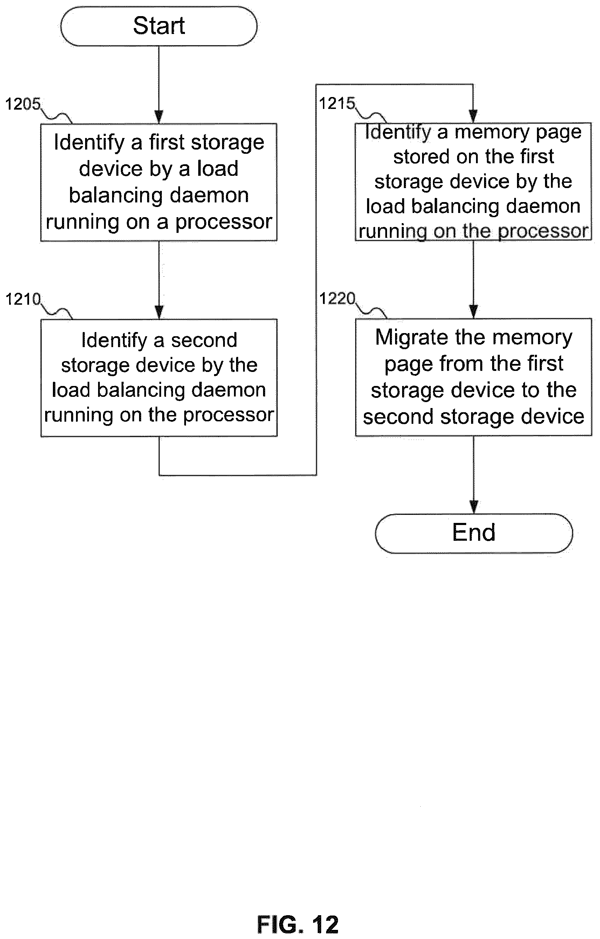

FIG. 12 shows a flowchart of a procedure to perform load balancing in the system of FIG. 1, according to embodiments of the disclosure. In FIG. 12, at block 1205, load balancing daemon 145 of FIG. 1 may identify storage device 120-1 of FIG. 1. Load balancing daemon 145 of FIG. 1 may use access logic 1105 of FIG. 11 to access update count 605 of FIG. 6 to identify storage device 120-1 of FIG. 1. At block 1210, load balancing daemon 145 of FIG. 1 may identify storage device 120-2 of FIG. 1. Load balancing daemon 145 of FIG. 1 may use access logic 1105 of FIG. 11 to access update count 605 of FIG. 6 to identify storage device 120-2 of FIG. 1. At block 1215, load balancing daemon 145 of FIG. 1 may identify memory page 905 of FIG. 9 on storage device 120-1 of FIG. 1. Load balancing daemon 145 of FIG. 1 may use access logic 1105 of FIG. 11 to access write count 610 of FIG. 6 to identify memory page 905 of FIG. 9. Finally, at block 1220, load balancing daemon 145 of FIG. 1 may initiate migration of memory page 905 of FIG. 9 from storage device 120-1 of FIG. 1 to storage device 120-2 of FIG. 2. Load balancing daemon 145 of FIG. 3 may use migration logic 1110 of FIG. 11 to perform this migration.

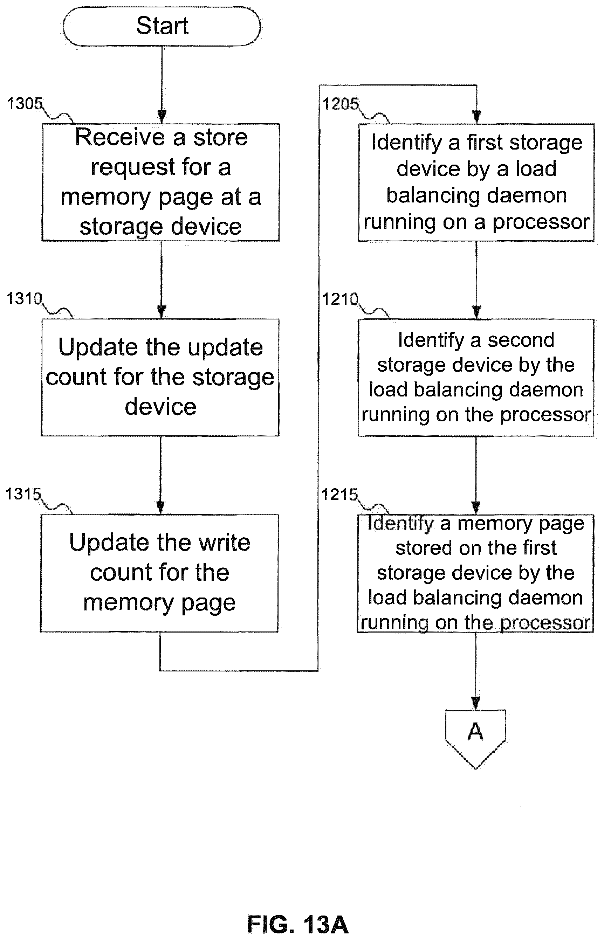

FIGs. 13A-13B show an alternative flowchart of an example procedure to perform load balancing in the system of FIG. 1, according to embodiments of the disclosure. FIGs. 13A-13B are similar to FIG. 12, but more general. In FIG. 13A, at block 1305, storage device 120 of FIG. 1 may receive store request 505 of FIG. 5 for memory page 905 of FIG. 9. At block 1310, as part of carrying out store request 505 of FIG. 5, increment logic 615 of FIG. 6 may increment update count 605 of FIG. 6, and at block 1315, increment logic 615 of FIG. 6 may increment write count 610 of FIG. 6 for the memory page being updated.

At block 1205, load balancing daemon 145 of FIG. 1 may identify storage device 120-1 of FIG. 1. Load balancing daemon 145 of FIG. 1 may use access logic 1105 of FIG. 11 to access update count 605 of FIG. 6 to identify storage device 120-1 of FIG. 1. At block 1210, load balancing daemon 145 of FIG. 1 may identify storage device 120-2 of FIG. 1. Load balancing daemon 145 of FIG. 1 may use access logic 1105 of FIG. 11 to access update count 605 of FIG. 6 to identify storage device 120-2 of FIG. 1. At block 1215, load balancing daemon 145 of FIG. 1 may identify memory page 905 of FIG. 9 on storage device 120-1 of FIG. 1. Load balancing daemon 145 of FIG. 1 may use access logic 1105 of FIG. 11 to access write count 610 of FIG. 6 to identify memory page 905 of FIG. 9.

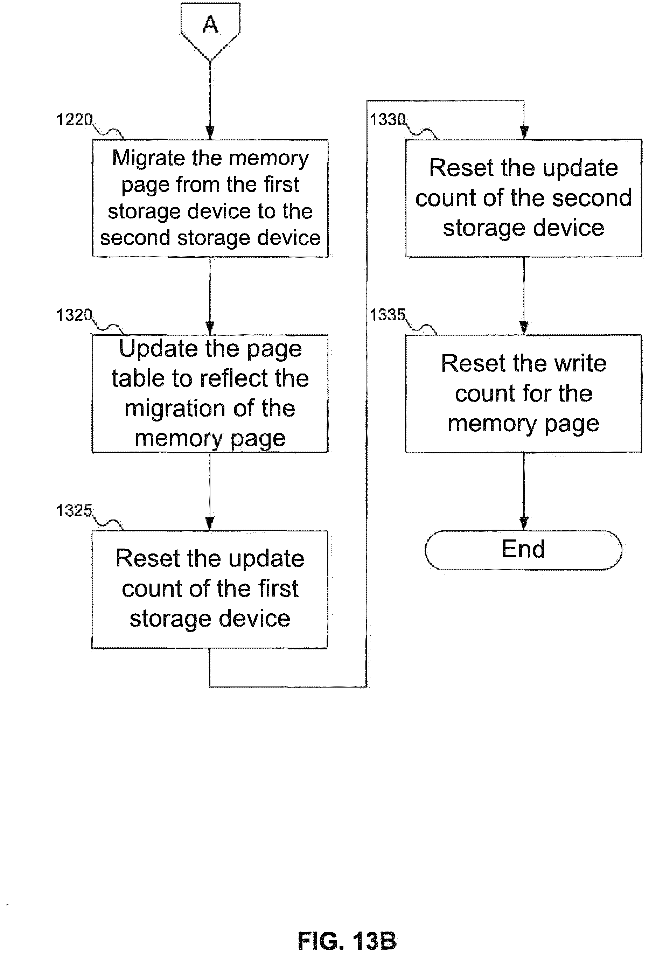

At block 1220 (FIG. 13B), load balancing daemon 145 of FIG. 1 may initiate migration of memory page 905 of FIG. 9 from storage device 120-1 of FIG. 1 to storage device 120-2 of FIG. 2. Load balancing daemon 145 of FIG. 3 may use migration logic 1110 of FIG. 11 to perform this migration. At block 1320, load balancing daemon 145 of FIG. 1 may update page table 135 of FIG. 1 to reflect the migration of memory page 905 of FIG. 9 from storage device 120-1 of FIG. 1 to storage device 120-2 of FIG. 1. Load balancing daemon 145 of FIG. 1 may use page table update logic 1115 of FIG. 11 to perform the update of page table 135 of FIG. 1.

At block 1325, load balancing daemon 145 of FIG. 1 may reset update count 605 of FIG. 6 in HDM 330 of FIG. 3 for storage device 120-1. At block 1330, load balancing daemon 145 of FIG. 1 may reset update count 605 of FIG. 6 in HDM 330 of FIG. 3 for storage device 120-2. Finally, at block 1335, load balancing daemon 145 of FIG. 1 may reset write count 610 of FIG. 6 for memory page 905 of FIG. 9 in storage device 120-1 of FIG. 1. More generally, at block 1335, load balancing daemon 145 of FIG. 1 may reset write counts 610 of FIG. 6 in HDM 330 of FIG. 3 for all memory pages in storage device 120-1 of FIG. 1, and all write counts 610 of FIG. 6 in HDM 330 of FIG. 3 for all memory pages in storage device 120-2 of FIG. 1. Load balancing daemon 145 may use reset logic 1120 to perform the resets described in blocks 1325, 1330, and 1335.

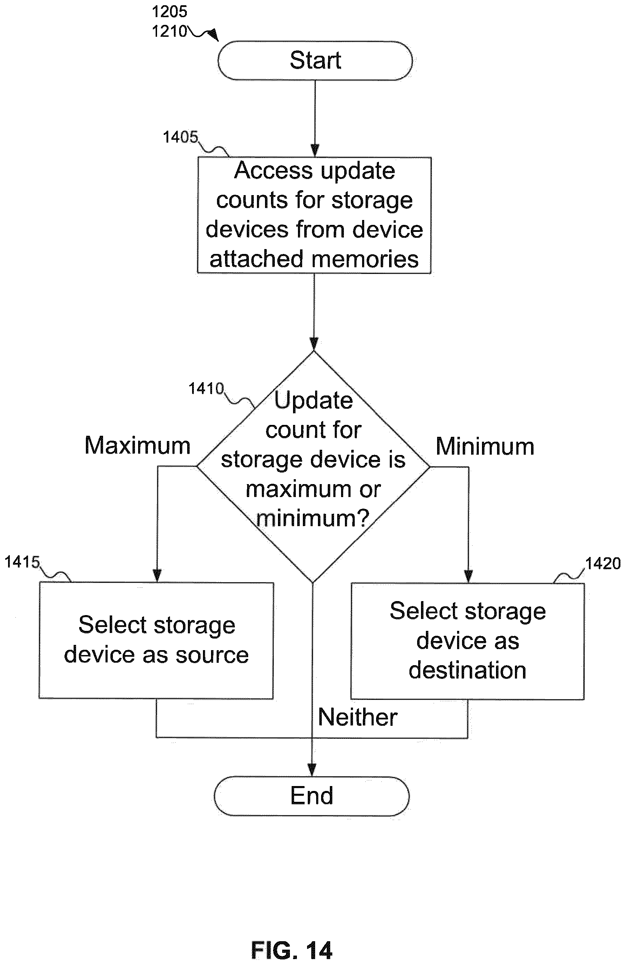

FIG. 14 shows a flowchart of an example procedure for load balancing daemon 145 of FIG. 1 to identify storage devices 120 of FIG. 1 between which pages may be migrated in the system of FIG. 1, according to embodiments of the disclosure. In FIG. 14, at block 1405, load balancing daemon 145 of FIG. 1 may use access logic 1105 of FIG. 11 to access update counts 605 of FIG. 6 from HDM 330 of FIG. 3 for storage devices 120 of FIG. 1. For each storage device 120 of FIG. 1, at block 1410, load balancing daemon 145 of FIG. 1 may consider the associated update count 605 of FIG. 6. If update count 605 of FIG. 6 for storage device 120 of FIG. 1 is a maximum value (that is, the highest update count across storage devices 120 of FIG. 1-more generally, if update count 605 of FIG. 6 for storage device 120 is higher than update count 605 of FIG. 6 for some other storage device 120 of FIG. 1)-then at block 1415 load balancing daemon 145 may select storage device 120 of FIG. 1 as a source storage device for data migration. If update count 605 of FIG. 6 for storage device 120 of FIG. 1 is a minimum value (that is, the lowest update count across storage devices 120 of FIG. 1-more generally, if update count 605 of FIG. 6 for storage device 120 is lower than update count 605 of FIG. 6 for some other storage device 120 of FIG. 1)-then at block 1415 load balancing daemon 145 may select storage device 120 of FIG. 1 as a destination storage device for data migration. For storage devices 120 of FIG. 1 whose associated update count 605 of FIG. 6 is not sufficiently high or low to be considered as either a source or destination storage device for data migration, storage device 120 of FIG. 1 may be passed by load balancing daemon 145 of FIG. 1.

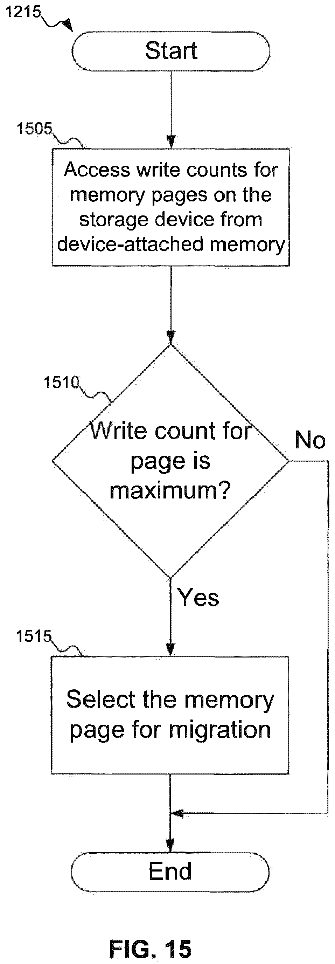

FIG. 15 shows a flowchart of an example procedure for load balancing daemon 145 of FIG. 1 to select memory page 905 of FIG. 9 to migrate in system 105 of FIG. 1, according to embodiments of the disclosure. In FIG. 15, at block 1505, load balancing daemon 145 of FIG. 1 may use access logic 1105 of FIG. 11 to access write counts 610 of FIG. 6 from HDM 330 of FIG. 3 for a source storage device. At block 1510, load balancing daemon 145 of FIG. 1 may determine if write count 610 of FIG. 6 for a particular memory page has a maximum value (that is, the highest write count for pages on storage device 120 of FIG. 1-more generally, load balancing daemon 145 of FIG. 1 may determine if write count 610 of FIG. 6 for a particular memory page is higher than write counts 610 of FIG. 6 for other memory pages on storage device 120 of FIG. 1-then at block 1515 load balancing daemon 145 of FIG. 1 may select associated memory page 905 of FIG. 9 for migration from storage device 120-1 of FIG. 1 to storage device 120-2 of FIG. 1.

FIG. 16 shows a flowchart of an alternative procedure for load balancing daemon 145 of FIG. 1 to identify storage devices 120 of FIG. 1 or memory pages 905 of FIG. 9 for migration in system 105 of FIG. 1, according to embodiments of the disclosure. In FIG. 16, at block 1605, load balancing daemon 145 of FIG. 1 may poll storage devices 120 of FIG. 1 for their update counts 605 of FIG. 6 and/or their write counts 610 of FIG. 6. At block 1610, load balancing daemon 145 of FIG. 1 may receive an interrupt originating from storage devices 120 of FIG. 1, with the update counts 605 of FIG. 6 and/or write counts 610 of FIG. 6 for the storage device 120 of FIG. 1.

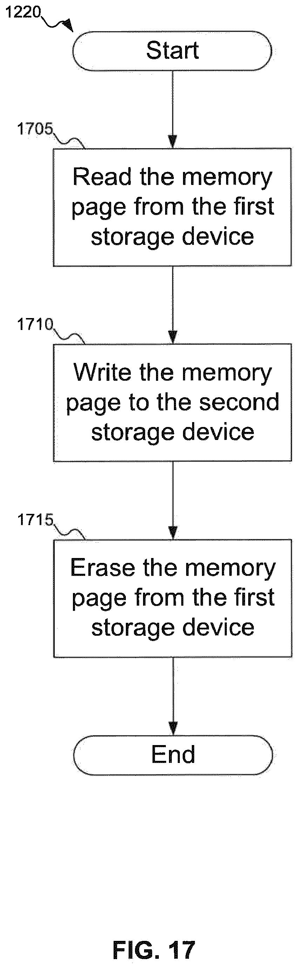

FIG. 17 shows a flowchart of a procedure for migration of memory page 905 of FIG. 9 in system 105 of FIG. 1 to occur, according to embodiments of the disclosure. In FIG. 17, at block 1705, load balancing daemon 145 of FIG. 1 may request that memory page 905 of FIG. 9 be read from storage device 120-1 of FIG. 1. At block 1710, load balancing daemon 145 of FIG. 1 may request that memory page 905 of FIG. 9 be written to storage device 120-2 of FIG. 1. Finally, at block 1715, load balancing daemon 145 of FIG. 1 may request that memory page 905 of FIG. 9 be erased from storage device 120 of FIG. 1. Note that block 1715 is not technically necessary, as migration of a page within the extended memory implies that the original memory address for the page may be released, which would mean that the page on storage device 120 of FIG. 1 may be erased.

In FIGs. 12-17, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of this disclosure introduce a new mechanism to detect hot pages using an indirect mechanism in a Solid State Drive (SSD) 120 of FIG. 1 and perform device-initiated data migration based on the hotness of the pages when the SSD is used for extended memory. Embodiments of the disclose may alleviate endurance issues when using SSDs with memory where fine-grained data updates can accelerate media wear.

As disclosed in embodiments, hot pages may migrate from one kind of system memory to another in a heterogeneous memory system 105 of FIG. 1 to balance the load and achieve better performance. In embodiments herein, non-volatile memory may be exposed as system memory using a cache-coherent interconnect protocol. A flash translation layer (FTL) of such non-volatile memory devices may monitor the number of Logical Page updates and internal logical block address (LBA)-to-physical block address (PBA) mapping updates.

Embodiments of the disclosure may count the number of updates by tracking LBA-to-PBA mapping changes in SSD 120 of FIG. 1. Some embodiments of the disclosure may store the update count in host-managed device memory (HDM) which may be accessed by both the host and the device. Some embodiments of the disclosure may reserve HDM to record a write count for each page. Some embodiments of the disclosure may feature a load balancing daemon 145 of FIG. 1 periodically checking the load of each device by checking the update count in HDM. In some embodiments of the disclosure, the load balancing daemon may perform page migration from a busiest device to an idlest device on host side: for example, using CXL.mem.

Advantages of embodiments of the disclosure may include an increase lifetime of non-volatile memory, such as SSD, Phase-Change Memory (PCM), and other non-volatile random access memory (NVRAM) having limited write endurance. Furthermore, embodiments of the disclosure may improve overall performance of SSDs by reducing the number of garbage collection runs.

Embodiments of the disclosure may include page migration for load balance. In some embodiments of the disclosure, this page migration may migrate pages from non-volatile memory to another non-volatile memory for load balancing. In some embodiments of the disclosure, in order to find out the busiest devices and the idlest devices, the FTL 335 of FIG. 3 may count the total number of writes over a certain period.

Embodiments of the disclosure may include a system 105 of FIG. 1 for load balancing for the CXL SSD which exposes the space to host system via CXL.mem.

Embodiments of the disclosure may include an FTL 335 of FIG. 3 able to monitor the number of LBA-PBA mapping updates to find hot page.

Embodiments of the disclosure may include storing the mapping update count in HDM 330 of FIG. 3 which may be accessed from both host and device.

Embodiments of the disclosure may include page migration for load balancing, and may further include the FTL 335 of FIG. 3 updating the total number of write in a certain period. Some embodiments of the disclosure may also include the load balance daemon 145 of FIG. 3 periodically checking and resetting the total write count. Furthermore, some embodiments of the disclosure may include hot pages being migrated from the busiest device to the idlest device.

Embodiments of this disclosure permit a load balancing daemon to determine information about writes to storage devices in a heterogeneous memory system. Based on this information, which may include update counts indicating the total number of writes to the storage devices, a load balancing daemon may select a busy storage device and an idle storage device, based on the relative number of writes to each storage device. The load balancing daemon may also use other information, such as the total number of writes to each page in the busy storage device, to select one or more pages for migration to the idle storage device. The load balancing daemon may have pages migrated from the busy storage device to the idle storage. The load balancing daemon may then update information in the host system to reflect the migration of the pages from the busy storage device to the idle storage device.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

Embodiments of the disclosure may extend to the following statements, without limitation:
Statement 1. An embodiment of the disclosure includes a system, comprising:
   a processor;
   a memory connected to the processor;
   a first storage device connected to the processor, the first storage device including a first storage portion, the first storage portion including a memory page, the first storage portion to extend the memory;
   a second storage device connected to the processor, the second storage device including a second storage portion, the second storage portion to extend the memory; and
   a load balancing daemon to migrate the memory page from the first storage portion of the first storage device to the second storage portion of the second storage device based at least in part on a first update count of the first storage device and a second update count of the second storage device.
Statement 2. An embodiment of the disclosure includes the system according to statement 1, wherein the load balancing daemon includes a migration logic to migrate the memory page from the first storage portion of the first storage device to the second storage portion of the second storage device.
Statement 3. An embodiment of the disclosure includes the system according to statement 1, wherein the first storage portion and the second storage portion extend the memory via a cache-coherent interconnect protocol.
Statement 4. An embodiment of the disclosure includes the system according to statement 3, wherein the cache-coherent interconnect protocol includes a Compute Express Link (CXL) protocol.
Statement 5. An embodiment of the disclosure includes the system according to statement 3, wherein the memory is drawn from a set including flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM).
Statement 6. An embodiment of the disclosure includes the system according to statement 3, wherein:
   the first storage device includes a first Solid State Drive (SSD); and
   the second storage device includes a second SSD.
Statement 7. An embodiment of the disclosure includes the system according to statement 3, wherein the load balancing daemon includes software executable by the processor,
Statement 8. An embodiment of the disclosure includes the system according to statement 3, wherein:
   the first storage device includes a first host-managed device memory (HDM) to store the first update count; and
   the second storage device includes a second HDM to store the second update count.
Statement 9. An embodiment of the disclosure includes the system according to statement 8, wherein the first update count is non-cacheable.
Statement 10. An embodiment of the disclosure includes the system according to statement 8, wherein the first storage device includes a second processor including a cache to cache the first update count, the second processor using a cache-coherent interconnect protocol to maintain coherence between the first update count in the cache and the first HDM.
Statement 11. An embodiment of the disclosure includes the system according to statement 8, wherein the load balancing daemon includes an access logic to access the first update count from the first HDM and to access the second update count from the second HDM.
Statement 12. An embodiment of the disclosure includes the system according to statement 8, wherein the load balancing daemon includes a reset logic to reset the first update count in the first HDM and to reset the second update count in the second HDM.
Statement 13. An embodiment of the disclosure includes the system according to statement 8, wherein the first HDM further stores a write count for the memory page.
Statement 14. An embodiment of the disclosure includes the system according to statement 13, wherein the load balancing daemon includes an access logic to access the write count from the first HDM.
Statement 15. An embodiment of the disclosure includes the system according to statement 3, wherein the load balancing daemon includes a poller to poll the first storage device for the first update count and to poll the second storage device for the second update count.
Statement 16. An embodiment of the disclosure includes the system according to statement 3, wherein:
   the first storage device includes a first interrupt logic to interrupt the load balancing daemon to provide the first update count; and
   the second storage device includes a second interrupt logic to interrupt the load balancing daemon to provide the second update count.
Statement 17. An embodiment of the disclosure includes the system according to statement 3, wherein the load balancing daemon is configured to migrate the memory page from the first storage portion of the first storage device to the second storage portion of the second storage device based at least in part on the first update count exceeding the second update count.
Statement 18. An embodiment of the disclosure includes the system according to statement 17, wherein the load balancing daemon is configured to migrate the memory page from the first storage portion of the first storage device to the second storage portion of the second storage device based at least in part on a difference between the first update count and the second update count exceeding a threshold.
Statement 19. An embodiment of the disclosure includes the system according to statement 18, wherein:
   the memory page is associated with a write count;
   the first storage portion further stores a second memory page, the second memory page associated with a second write count; and
   the load balancing daemon is configured to migrate the memory page from the first storage portion of the first storage device to the second storage portion of the second storage device based at least in part on the difference between the first update count and the second update count exceeding the threshold and the write count being higher than the second write count.
Statement 20. An embodiment of the disclosure includes the system according to statement 3, wherein the storage device includes an increment logic to increment the first update count based at least in part on new data being written to the first storage device.
Statement 21. An embodiment of the disclosure includes the system according to statement 20, wherein the increment logic is configured to increment a write count associated with the memory page based at least in part on the new data being written to the memory page.
Statement 22. An embodiment of the disclosure includes the system according to statement 3, wherein:
   the first storage portion includes a second memory page; and
   the load balancing daemon is configured to migrate the second memory page from the first storage portion of the first storage device to the memory based at least in part on the first update count of the first storage device and a second write count associated with the second memory page exceeding a threshold.
Statement 23. An embodiment of the disclosure includes the system according to statement 3, wherein the memory stores a second memory pageand a second write count for the second memory page.
Statement 24. An embodiment of the disclosure includes the system according to statement 23, wherein the load balancing daemon is configured to migrate the second memory page from the memory to the second storage portion of the second storage device based at least in part on the second write count being less than a threshold.
Statement 25. An embodiment of the disclosure includes the system according to statement 3, wherein:
   the first storage device further includes a third storage portion, the third storage portion accessible by an application running on the processor; and
   the second storage device further includes a fourth storage portion, the fourth storage portion accessible by the application running on the processor.
Statement 26. An embodiment of the disclosure includes a storage device, comprising:
   a storage including a first storage portion, the first storage portion including a memory page;
   a controller to process at least one of a load request or a store request sent to the storage device; and
   an increment logic to manage an update count identifying a first number of times data has been written to the storage and a write count identifying a second number of times data has been written to the memory page,
   wherein the storage extends a memory.
Statement 27. An embodiment of the disclosure includes the storage device according to statement 26, wherein the storage device supports a cache-coherent interconnect protocol.
Statement 28. An embodiment of the disclosure includes the storage device according to statement 27, wherein the cache-coherent interconnect protocol includes a Compute Express Link (CXL) protocol.
Statement 29. An embodiment of the disclosure includes the storage device according to statement 26, wherein the storage device includes a Solid State Drive (SSD).
Statement 30. An embodiment of the disclosure includes the storage device according to statement 29, wherein the SSD includes a flash translation layer (FTL) including the increment logic.
Statement 31. An embodiment of the disclosure includes the storage device according to statement 30, wherein the increment logic is configured to disregard a garbage collection of the memory page.
Statement 32. An embodiment of the disclosure includes the storage device according to statement 30, wherein the increment logic is configured to disregard a wear leveling of the memory page.
Statement 33. An embodiment of the disclosure includes the storage device according to statement 26, further comprising a HDM to store the update count and the write count.
Statement 34. An embodiment of the disclosure includes the storage device according to statement 33, wherein the update count and the write count are non-cacheable.
Statement 35. An embodiment of the disclosure includes the storage device according to statement 33, wherein the first storage device includes a processor including a cache to cache the update count, the processor using a cache-coherent interconnect protocol maintaining coherence between the update count in the cache and the HDM.
Statement 36. An embodiment of the disclosure includes the storage device according to statement 26, wherein the storage device further includes a second storage portion accessible by an application running on a processor.
Statement 37. An embodiment of the disclosure includes the storage device according to statement 26, further comprising an interrupt logic to interrupt a load balancing daemon to provide the update count.
Statement 38. An embodiment of the disclosure includes a method, comprising:
   identifying a first storage device by a load balancing daemon running on a processor;
   identifying a second storage device by the load balancing daemon running on the processor;
   identifying a memory page stored on the first storage device by the load balancing daemon running on the processor; and
   migrating the memory page from the first storage device to the second storage device,
   wherein the first storage device and the second storage device extend a memory.
Statement 39. An embodiment of the disclosure includes the method according to statement 38, wherein the first storage device and the second storage device extend a memory via a cache-coherent interconnect protocol.
Statement 40. An embodiment of the disclosure includes the method according to statement 39, wherein the cache-coherent interconnect protocol includes a Compute Express Link (CXL) protocol.
Statement 41. An embodiment of the disclosure includes the method according to statement 39, wherein:
   the first storage device includes a first Solid State Drive (SSD); and
   the second storage device includes a second SSD.
Statement 42. An embodiment of the disclosure includes the method according to statement 39, wherein:
   identifying the first storage device by the load balancing daemon running on the processor includes determining a first update count of the first storage device; and
   identifying the second storage device by the load balancing daemon running on the processor includes determining a second update count of the second storage device.
Statement 43. An embodiment of the disclosure includes the method according to statement 42, wherein:
   determining the first update count of the first storage device includes accessing the first update count from a first HDM of the first storage device; and
   determining the second update count of the second storage device includes accessing the second update count from a second HDM of the second storage device.
Statement 44. An embodiment of the disclosure includes the method according to statement 42, wherein:
   identifying the first storage device by the load balancing daemon running on the processor further includes determining that the first update count is greater than the second update count; and
   identifying the second storage device by the load balancing daemon running on the processor includes determining that the second update count is less than the first update count.
Statement 45. An embodiment of the disclosure includes the method according to statement 42, wherein:
   determining the first update count of the first storage device includes:
      polling the first storage device for the first update count; and
      receiving the first update countfrom the first storage device; and
   determining the second update count of the second storage device includes:
      polling the second storage device for the second update count; and
      receiving the second update count from the second storage device.
Statement 46. An embodiment of the disclosure includes the method according to statement 42, further comprising:
   receiving a store request at the first storage device; and
   updating the first update count based at least in part on receiving the store request.
Statement 47. An embodiment of the disclosure includes the method according to statement 46, wherein
   receiving the store request at the first storage device includes receiving the store request to update the memory page at the first storage device; and
   the method further comprises updating a write count associated with the memory page on the first storage device.
Statement 48. An embodiment of the disclosure includes the method according to statement 42, further comprising:
   resetting the first update count of the first storage device by the load balancing daemon; and
   resetting the second update count of the second storage device by the load balancing daemon.
Statement 49. An embodiment of the disclosure includes the method according to statement 42, further comprising resetting a write count associated with the memory page on the first storage device by the load balancing daemon.
Statement 50. An embodiment of the disclosure includes the method according to statement 39 wherein identifying the memory page stored on the first storage device by the load balancing daemon running on the processor includes identifying the memory page stored on the first storage device by the load balancing daemon running on the processor based at least in part on a write count for the memory page.
Statement 51. An embodiment of the disclosure includes the method according to statement 50, wherein identifying the memory page stored on the first storage device by the load balancing daemon running on the processor further includes:
   determining the write count for the memory page;
   determining a second write count for a second memory page stored on the first storage device; and
   identifying the memory page based at least in part on the write count being greater than the second write count.
Statement 52. An embodiment of the disclosure includes the method according to statement 51, wherein:
   determining the write count for the memory page includes accessing the write count from a HDM of the storage device; and
   determining the second write count for the second memory page stored on the first storage device includes accessing the second write count from the HDM of the storage device.
Statement 53. An embodiment of the disclosure includes the method according to statement 51, wherein:
   determining the write count for the memory page includes:
      polling the first storage device for the write count; and
      receiving the write count from the first storage device; and
   determining the second write count for the second memory page stored on the first storage device includes:
      polling the first storage device for the second write count; and
      receiving the second write count from the first storage device.
Statement 54. An embodiment of the disclosure includes the method according to statement 53, wherein:
   receiving the write count from the first storage device includes receiving a first interrupt from the first storage device, the first interrupt including the write count; and
   receiving the second write count from the first storage device includes receiving a second interrupt from the first storage device, the second interrupt including the second write count.
Statement 55. An embodiment of the disclosure includes the method according to statement 39, wherein migrating the memory page from the first storage device to the second storage device includes migrating the memory page from the first storage device to a memory.
Statement 56. An embodiment of the disclosure includes the method according to statement 39, wherein migrating the memory page from the first storage device to the second storage device includes migrating the memory page from a memory to the second storage device.
Statement 57. An embodiment of the disclosure includes the method according to statement 39, wherein migrating the memory page from the first storage device to the second storage device includes:
   reading the memory page from the first storage device; and
   writing the memory page to the second storage device.
Statement 58. An embodiment of the disclosure includes the method according to statement 57, wherein migrating the memory page from the first storage device to the second storage device further includes erasing the memory page from the first storage device.
Statement 59. An embodiment of the disclosure includes the method according to statement 39, wherein migrating the memory page from the first storage device to the second storage device includes updating a page table based at least in part on migration of the page to the second storage device.
Statement 60. An embodiment of the disclosure includes the method according to statement 39, wherein the first storage device includes a first storage portion including the memory page.
Statement 61. An embodiment of the disclosure includes the method according to statement 60, wherein the first storage device further includes a second storage portion, the second storage portion accessible by an application running on the processor.
Statement 62. An embodiment of the disclosure includes a method, comprising:
   receiving a store request at a storage device; and
   updating an update count for the storage device based at least in part on receiving the store request.
Statement 63. An embodiment of the disclosure includes the method according to statement 62, wherein
   receiving the store request at the storage device includes receiving the store request to update the memory page at the storage device; and
   the method further comprises updating a write count associated with the memory page on the storage device.
Statement 64. An embodiment of the disclosure includes the method according to statement 62, further comprising:
   receiving a poll at the storage device from a load balancing daemon for the update count; and
   sending the update count from the storage device to the load balancing daemon.
Statement 65. An embodiment of the disclosure includes the method according to statement 64, wherein sending the update count from the storage device to the load balancing daemon includes sending an interrupt from the storage device to the load balancing daemon, the interrupt including the update count.
Statement 66. An embodiment of the disclosure includes the method according to statement 62, further comprising:
   receiving a poll at the storage device from a load balancing daemon for a write count; and
   sending the write count from the storage device to the load balancing daemon.
Statement 67. An embodiment of the disclosure includes the method according to statement 66, wherein sending the write count from the storage device to the load balancing daemon includes sending an interrupt from the storage device to the load balancing daemon, the interrupt including the write count.
Statement 68. An embodiment of the disclosure includes the method according to statement 62, further comprising:
   receiving a request at the storage device to reset the update count; and
   resetting the update count for the storage device.
Statement 69. An embodiment of the disclosure includes the method according to statement 62, further comprising:
   receiving a request at the storage device to reset a write count; and
   resetting the write count for the storage device.
Statement 70. An embodiment of the disclosure includes the method according to statement 62, wherein the first storage device includes a first storage portion including the memory page.
Statement 71. An embodiment of the disclosure includes the method according to statement 70, wherein the first storage device further includes a second storage portion, the second storage portion accessible by an application running on the processor.
Statement 72. An embodiment of the disclosure includes an article, comprising a non-transitory storage medium, the non-transitory storage medium having stored thereon instructions that, when executed by a machine, result in:
   identifying a first storage device by a load balancing daemon running on a processor;
   identifying a second storage device by the load balancing daemon running on the processor;
   identifying a memory page stored on the first storage device by the load balancing daemon running on the processor; and
   migrating the memory page from the first storage device to the second storage device.
Statement 73. An embodiment of the disclosure includes the article according to statement 72, wherein the first storage device and the second storage device extend a memory via a cache-coherent interconnect protocol.
Statement 74. An embodiment of the disclosure includes the article according to statement 73, wherein the cache-coherent interconnect protocol includes a Compute Express Link (CXL) protocol.
Statement 75. An embodiment of the disclosure includes the article according to statement 73, wherein:
   the first storage device includes a first Solid State Drive (SSD); and
   the second storage device includes a second SSD.
Statement 76. An embodiment of the disclosure includes the article according to statement 73, wherein:
   identifying the first storage device by the load balancing daemon running on the processor includes determining a first update count of the first storage device; and
   identifying the second storage device by the load balancing daemon running on the processor includes determining a second update count of the second storage device.
Statement 77. An embodiment of the disclosure includes the article according to statement 76, wherein:
   determining the first update count of the first storage device includes accessing the first update count from a first HDM of the first storage device; and
   determining the second update count of the second storage device includes accessing the second update count from a second HDM of the second storage device.
Statement 78. An embodiment of the disclosure includes the article according to statement 76, wherein:
   identifying the first storage device by the load balancing daemon running on the processor further includes determining that the first update count is greater than the second update count; and
   identifying the second storage device by the load balancing daemon running on the processor includes determining that the second update count is less than the first update count.
Statement 79. An embodiment of the disclosure includes the article according to statement 76, wherein:
   determining the first update count of the first storage device includes:
      polling the first storage device for the first update count; and
      receiving the first update countfrom the first storage device; and
   determining the second update count of the second storage device includes:
      polling the second storage device for the second update count; and
      receiving the second update count from the second storage device.
Statement 80. An embodiment of the disclosure includes the article according to statement 76, the non-transitory storage medium having stored thereon further instructions that, when executed by the machine, result in:
   receiving a store request at the first storage device; and
   updating the first update count based at least in part on receiving the store request.
Statement 81. An embodiment of the disclosure includes the article according to statement 80, wherein
   receiving the store request at the first storage device includes receiving the store request to update the memory page at the first storage device; and
   the non-transitory storage medium has stored thereon further instructions that, when executed by the machine, result in updating a write count associated with the memory page on the first storage device.
Statement 82. An embodiment of the disclosure includes the article according to statement 76, the non-transitory storage medium having stored thereon further instructions that, when executed by the machine, result in:
   resetting the first update count of the first storage device by the load balancing daemon; and
   resetting the second update count of the second storage device by the load balancing daemon.
Statement 83. An embodiment of the disclosure includes the article according to statement 76, the non-transitory storage medium having stored thereon further instructions that, when executed by the machine, result in resetting a write count associated with the memory page on the first storage device by the load balancing daemon.
Statement 84. An embodiment of the disclosure includes the article according to statement 73 wherein identifying the memory page stored on the first storage device by the load balancing daemon running on the processor includes identifying the memory page stored on the first storage device by the load balancing daemon running on the processor based at least in part on a write count for the memory page.
Statement 85. An embodiment of the disclosure includes the article according to statement 84, wherein identifying the memory page stored on the first storage device by the load balancing daemon running on the processor further includes:
   determining the write count for the memory page;
   determining a second write count for a second memory page stored on the first storage device; and
   identifying the memory page based at least in part on the write count being greater than the second write count.
Statement 86. An embodiment of the disclosure includes the article according to statement 85, wherein:
   determining the write count for the memory page includes accessing the write count from a HDM of the storage device; and
   determining the second write count for the second memory page stored on the first storage device includes accessing the second write count from the HDM of the storage device.
Statement 87. An embodiment of the disclosure includes the article according to statement 85, wherein:
   determining the write count for the memory page includes:
      polling the first storage device for the write count; and
      receiving the write count from the first storage device; and
   determining the second write count for the second memory page stored on the first storage device includes:
      polling the first storage device for the second write count; and
      receiving the second write count from the first storage device.
Statement 88. An embodiment of the disclosure includes the article according to statement 87, wherein:
   receiving the write count from the first storage device includes receiving a first interrupt from the first storage device, the first interrupt including the write count; and
   receiving the second write count from the first storage device includes receiving a second interrupt from the first storage device, the second interrupt including the second write count.
Statement 89. An embodiment of the disclosure includes the article according to statement 73, wherein migrating the memory page from the first storage device to the second storage device includes migrating the memory page from the first storage device to a memory.
Statement 90. An embodiment of the disclosure includes the article according to statement 73, wherein migrating the memory page from the first storage device to the second storage device includes migrating the memory page from a memory to the second storage device.
Statement 91. An embodiment of the disclosure includes the article according to statement 73, wherein migrating the memory page from the first storage device to the second storage device includes:
   reading the memory page from the first storage device; and
   writing the memory page to the second storage device.
Statement 92. An embodiment of the disclosure includes the article according to statement 91, wherein migrating the memory page from the first storage device to the second storage device further includes erasing the memory page from the first storage device.
Statement 93. An embodiment of the disclosure includes the article according to statement 73, wherein migrating the memory page from the first storage device to the second storage device includes updating a page table based at least in part on migration of the page to the second storage device.
Statement 94. An embodiment of the disclosure includes the article according to statement 73, wherein the first storage device includes a first storage portion including the memory page.
Statement 95. An embodiment of the disclosure includes the article according to statement 94, wherein the first storage device further includes a second storage portion, the second storage portion accessible by an application running on the processor.
Statement 96. An embodiment of the disclosure includes an article, comprising a non-transitory storage medium, the non-transitory storage medium having stored thereon instructions that, when executed by a machine, result in:
   receiving a store request at a storage device; and
   updating an update count for the storage device based at least in part on receiving the store request.
Statement 97. An embodiment of the disclosure includes the article according to statement 96, wherein
   receiving the store request at the storage device includes receiving the store request to update the memory page at the storage device; and
   the non-transitory storage medium has stored thereon further instructions that, when executed by the machine, result in updating a write count associated with the memory page on the storage device.
Statement 98. An embodiment of the disclosure includes the article according to statement 96, the non-transitory storage medium having stored thereon further instructions that, when executed by the machine, result in:
   receiving a poll at the storage device from a load balancing daemon for the update count; and
   sending the update count from the storage device to the load balancing daemon.
Statement 99. An embodiment of the disclosure includes the article according to statement 98, wherein sending the update count from the storage device to the load balancing daemon includes sending an interrupt from the storage device to the load balancing daemon, the interrupt including the update count.
Statement 100.An embodiment of the disclosure includes the article according to statement 96, the non-transitory storage medium having stored thereon further instructions that, when executed by the machine, result in:
   receiving a poll at the storage device from a load balancing daemon for a write count; and
   sending the write count from the storage device to the load balancing daemon.
Statement 101.An embodiment of the disclosure includes the article according to statement 100, wherein sending the write count from the storage device to the load balancing daemon includes sending an interrupt from the storage device to the load balancing daemon, the interrupt including the write count.
Statement 102.An embodiment of the disclosure includes the article according to statement 96, the non-transitory storage medium having stored thereon further instructions that, when executed by the machine, result in:
   receiving a request at the storage device to reset the update count; and
   resetting the update count for the storage device.
Statement 103.An embodiment of the disclosure includes the article according to statement 96, the non-transitory storage medium having stored thereon further instructions that, when executed by the machine, result in:
   receiving a request at the storage device to reset a write count; and
   resetting the write count for the storage device.
Statement 104.An embodiment of the disclosure includes the article according to statement 96, wherein the first storage device includes a first storage portion including the memory page.
Statement 105.An embodiment of the disclosure includes the article according to statement 104, wherein the first storage device further includes a second storage portion, the second storage portion accessible by an application running on the processor.

Consequently, in view of the wide variety of permutations to the embodiments described herein, this detailed description and accompanying material is intended to be illustrative only, and should not be taken as limiting the scope of the invention as defined by the appended claims.

## Claims

1. A system, comprising:
a processor (110);
a memory (115) connected to the processor (110);
a first storage device (120; 120-1) connected to the processor (110), the first storage device (120; 120-1) including a first storage portion , the first storage portion including a memory page (905; 1015-1 to 1015-8), the first storage portion to extend the memory (115);
a second storage device (120; 120-2) connected to the processor (110), the second storage device (120; 120-2) including a second storage portion, the second storage portion to extend the memory (115); and
a load balancing daemon (145) to migrate the memory page (905; 1015-1 to 1015-8) from the first storage portion of the first storage device (120; 120-1) to the second storage portion of the second storage device (120; 120-2) based at least in part on a first update count (605) of the first storage device (120; 120-1) and a second update count (605) of the second storage device (120; 120-2).

2. The system according to claim 1, wherein the first storage portion and the second storage portion extend the memory (115) via a cache-coherent interconnect protocol.

3. The system according to claim 2, wherein the cache-coherent interconnect protocol includes a Compute Express Link, CXL, protocol.

4. The system according to any one of claims 1 to 3, wherein:
the first storage device (120; 120-1) includes a first host-managed device memory, HDM, (330) to store the first update count (605); and
the second storage device (120; 120-2) includes a second HDM (330) to store the second update count (605).

5. The system according to claim 4, wherein the load balancing daemon (145) includes an access logic to access the first update count (605) from the first HDM (330) and to access the second update count (605) from the second HDM (330).

6. The system according to claim 4 or 5, wherein the load balancing daemon (145) includes a reset logic to reset the first update count (605) in the first HDM (330) and to reset the second update count (605) in the second HDM (330).

7. The system according to any one of claims 4 to 6, wherein the first HDM (330) further stores a write count (610-1 to 610-6) for the memory page (905; 1015-1 to 1015-8).

8. A storage device (120; 120-1; 120-2), comprising:
a storage including a first storage portion, the first storage portion to store a memory page (905; 1015-1 to 1015-8);
a controller to process at least one of a load request or a store request sent to the storage device (120; 120-1; 120-2); and
an increment logic to manage an update count (605) identifying a first number of times data has been written to the storage and a write count (610-1 to 610-6) identifying a second number of times data has been written to the memory page (905; 1015-1 to 1015-8),
wherein the storage extends a memory (115).

9. The storage device (120; 120-1; 120-2) according to claim 8, wherein the storage device (120; 120-1; 120-2) supports a cache-coherent interconnect protocol.

10. The storage device (120; 120-1; 120-2) according to claim 9, wherein the cache-coherent interconnect protocol includes a Compute Express Link, CXL, protocol.

11. The storage device (120; 120-1; 120-2) according to any one of claims 8 to 10, further comprising a HDM to store the update count (605) and the write count (610-1 to 610-6).

12. A method, comprising:
identifying (1205) a first storage device (120; 120-1) by a load balancing daemon (145) running on a processor (110);
identifying (1210) a second storage device (120; 120-2) by the load balancing daemon (145) running on the processor (110);
identifying (1215) a memory page (905; 1015-1 to 1015-8) stored on the first storage device (120; 120-1) by the load balancing daemon (145) running on the processor (110); and
migrating (1220) the memory page (905; 1015-1 to 1015-8) from the first storage device (120; 120-1) to the second storage device (120; 120-2),
wherein the first storage device (120; 120-1) and the second storage device (120; 120-2) extend a memory (115).

13. The method according to claim 12, wherein the first storage device (120; 120-1) and the second storage device (120; 120-2) extend a memory (115) via a cache-coherent interconnect protocol.

14. The method according to claim 13, wherein the cache-coherent interconnect protocol includes a Compute Express Link, CXL, protocol.

15. The method according to claim 13 or 14, wherein:
identifying (1205) the first storage device (120; 120-1) by the load balancing daemon (145) running on the processor (110) includes determining a first update count (605) of the first storage device (120; 120-1); and
identifying (1210) the second storage device (120; 120-2) by the load balancing daemon (145) running on the processor (110) includes determining a second update count (605) of the second storage device (120; 120-2).

16. The method according to claim 15, wherein:
determining the first update count (605) of the first storage device (120; 120-1) includes accessing the first update count (605) from a first host-managed device memory, HDM, (330) of the first storage device (120; 120-1); and
determining the second update count (605) of the second storage device (120; 120-2) includes accessing the second update count (605) from a second HDM (330) of the second storage device (120; 120-2).

17. The method according to claim 15 or 16, further comprising:
resetting (1325) the first update count (605) of the first storage device (120; 120-1) by the load balancing daemon (145); and
resetting (1335) the second update count (605) of the second storage device (120; 120-2) by the load balancing daemon (145).

18. The method according to any one of claims 15 to 17, further comprising resetting (1335) a write count (610-1 to 610-6) associated with the memory page (905; 1015-1 to 1015-8) on the first storage device (120; 120-1) by the load balancing daemon (145).

19. The method according to any one of claims 13 to 18 wherein identifying (1215) the memory page (905; 1015-1 to 1015-8) stored on the first storage device (120; 120-1) by the load balancing daemon (145) running on the processor (110) includes identifying the memory page (905; 1015-1 to 1015-8) stored on the first storage device (120; 120-1) by the load balancing daemon (145) running on the processor (110) based at least in part on a write count (610-1 to 610-6) for the memory page (905; 1015-1 to 1015-8).

20. The method according to any one of claims 13 to 19, wherein migrating (1220) the memory page (905; 1015-1 to 1015-8) from the first storage device (120; 120-1) to the second storage device (120; 120-2) includes updating a page table based at least in part on migration of the page to the second storage device (120; 120-2).
